# EUROPEAN PATENT APPLICATION

(11) **EP 4 746 525 A1**
(43) Date of publication of application: **20.05.2026**
(21) Application number: 23944714.7
(22) Date of filing: 12.07.2023
(51) Int. Cl.: H04W 48/08

(54) **INFORMATION TRANSMISSION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Dehns Germany Partnerschaft mbB
(86) International application number: PCT/CN2023/107098
(87) International publication number: WO 2025/010694

(57) **Abstract**

Embodiments of the present disclosure provide an information transmission method and apparatus, a communication device, a communication system, and a storage medium. A first network element receives first information sent by a third network element, the first information being used for instructing the first network element to perform admission control of a network slice for a first PDU session, wherein the first PDU session is associated with a service group.

## Description

### TECHNICAL FIELD

The present disclosure relates to the technical field of communication, and in particular, to information transmission methods and apparatuses, a communication device, a communication system and a storage medium.

### BACKGROUND

Mobile media services, cloud-based augmented reality (AR)/virtual reality (VR) and other eXtended Reality (XR) services, cloud games, and video-based remote control services for machines or drones are expected to contribute increasingly high traffic to 5G networks. In addition to audio and video streams, XR services also involve multi-modal data streams, such as data streams for biotactile perception. These multi-modal data refer to input data describing the same service or application, which comes from the same device or different devices (including sensors) and may be output to one or more target device terminals. Each data stream in the multi-modal data generally has a certain or even strong correlation, such as the synchronization of audio and video streams, and the synchronization of tactile and visual data. The data streams of such media services themselves, the relationships between various data streams, and the network transmission requirements of these service data streams all have certain common characteristics. The effective identification and utilization of these characteristics will better facilitate the transmission and control of networks and services, as well as enhance service assurance and user experience.

### SUMMARY

With the enhancement of terminal functions, terminals consume high energy, resulting in weak battery life.

The embodiments of the present disclosure provide information transmission methods and apparatuses, a communication device, and a storage medium.

According to a first aspect of the embodiments of the present disclosure, an information transmission method is provided, where the method is performed by a first network function, and the method includes:
receiving first information sent by a third network function, where the first information is used to indicate the first network function to perform admission control of a network slice for a first protocol data unit (PDU) session, and the first PDU session is associated with a service group.

According to a second aspect of the embodiments of the present disclosure, an information transmission method is provided, where the method is executed by a second network function, and the method includes:
receiving second information sent by a first network function, where the second information is used to indicate the second network function to perform admission control of a network slice for a first PDU session, and the first PDU session is associated with a service group.

According to a third aspect of the embodiments of the present disclosure, an information transmission method is provided, where the method is performed by a third network function, and the method includes:
sending first information to a first network function, where the first information is used to indicate the first network function to perform admission control of a network slice for a first PDU session, and the first PDU session is associated with a service group.

According to a fourth aspect of the embodiments of the present disclosure, an information transmission method is provided, where the method is performed by a communication system and includes:
sending, by a third network function, first information to a first network function, where the first information is used to indicate the first network function to perform admission control of a network slice for a first PDU session, and the first PDU session is associated with a service group.

According to a fifth aspect of the embodiments of the present disclosure, an information transmission apparatus is provided, where the apparatus includes:
a transceiver module, configured to receive first information sent by a third network function, where the first information is used to indicate the first network function to perform admission control of a network slice for a first PDU session, and the first PDU session is associated with a service group.

According to a sixth aspect of the embodiments of the present disclosure, an information transmission apparatus is provided, where the apparatus includes:
a transceiver module, configured to receive second information sent by a first network function, where the second information is used to indicate the second network function to perform admission control of a network slice for a first PDU session, where the first PDU session is associated with a service group.

According to a seventh aspect of the embodiments of the present disclosure, an information transmission apparatus is provided, where the apparatus includes:
a transceiver module, configured to send first information to a first network function, where the first information is used to indicate the first network function to perform admission control of a network slice for a first PDU session, and the first PDU session is associated with a service group.

According to an eighth aspect of the embodiments of the present disclosure, a communication system is provided, including:
a first network function, configured to implement the information transmission method described in the first aspect.
a second network function, configured to implement the information transmission method described in the second aspect.
a third network function, configured to implement the information transmission method described in the third aspect.

According to a ninth aspect of the present disclosure, a communication device is provided, where the communication device includes:
one or more processors;
the processor is configured to call instructions to cause the communication device to execute the information transmission method according to the first, second, or third aspect of the claims.

According to a tenth aspect of the embodiments of the present disclosure, a storage medium is provided, where the storage medium stores instructions that, when executed on a communication device, cause the communication device to execute the information transmission method described in the first, second, or third aspect.

The terminal can perform beam switching in a timely manner, improve the time accuracy of operations related to beam switching execution, and ensure service continuity.

It should be understood that the above general description and the following detailed description are exemplary and explanatory only, and are not intended to limit the embodiments of the present disclosure.

### BRIEF DESCRIPTION OF THE DRAWINGS

The accompanying drawings herein are incorporated into and constitute a part of the description, illustrate embodiments consistent with the present disclosure, and are used together with the description to explain the principles of the embodiments of the present disclosure.

### DETAILED DESCRIPTION

The embodiments of the present disclosure provide information transmission methods and apparatuses, a communication device, a communication system, and a storage medium.

In a first aspect, an embodiment discloses an information transmission method, where the method is performed by a first network function, and the method includes:

receiving first information sent by a third network function, where the first information is used to indicate the first network function to perform admission control of a network slice for a first PDU session, and the first PDU session is associated with a service group.

In the above embodiment, during the admission control, at least the service group of the first PDU session can be taken into account to adjust the admission manner, to improve the consistency of the admission control policy for the first PDU session(s) related to the service group in the admission control and enhance the user experience.

With reference to some embodiments of the first aspect, in some embodiments, the first information is further used to indicate at least one of following:
the first network function releasing the first PDU session from the network slice;
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

In the above embodiments, during the admission control, at least the service group of the PDU session can be taken into account to adjust the admission manner, to improve the consistency of the admission control policy for PDU sessions related to the service group during the establishment and release processes and enhance the user experience.

With reference to some embodiments of the first aspect, in some embodiments, the method further includes:
performing admission control of the network slice for the first PDU session based on a comparison result between a first number of established second PDU sessions in the first network function for the network slice and a first threshold.

In the above embodiments, during the admission control procedure, admission control is performed based on the number of first PDU sessions in the network slice, which reduces situations where the network slice capacity is exceeded, improves communication stability, and enhances user experience.

With reference to some embodiments of the first aspect, in some embodiments, the method further includes:
in response to the first number being less than or equal to the first threshold, establishing the first PDU session in the network slice; or
in response to the first number being greater than the first threshold, sending second information to a second network function, where the second information is used to indicate the second network function to perform admission control associated with the network slice for the first PDU session.

In the foregoing embodiments, during the admission control, admission control is performed based on the number of first PDU sessions in the network slice, which reduces situations where the network slice capacity is exceeded and improves communication stability. When the capacity of the local first network function is exceeded, a request for admission control is sent to the second network function with higher capacity. Through hierarchical admission control, the communication requirements of the terminal are met, and the user experience is enhanced.

With reference to some embodiments of the first aspect, in some embodiments, the method further includes:
in response to that the service group associated with the first PDU session is registered for the network slice in the first network function, establishing the first PDU session in the service group associated with the first PDU session; or
in response to that the service group associated with the first PDU session is not registered for the network slice in the first network function, and a second number of service groups already registered in the first network function for the network slice is less than or equal to a second threshold, registering the service group associated with the first PDU session in the first network function.

In the above embodiments, during the admission control, at least the service group of the first PDU session can be taken into account to adjust the admission manner, to improve the consistency of the admission control policy for the first PDU session(s) related to the service group in the admission control and enhance the user experience.

With reference to some embodiments of the first aspect, in some embodiments, the second information is further used to indicate at least one of the following:
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

In the above embodiments, through the second information, the second network function can determine the service group associated with the first PDU session, and further perform access control based on the service group, to improve the consistency of the admission control policy for the first PDU session(s) related to the service group in the admission control and enhance the user experience.

With reference to some embodiments of the first aspect, in some embodiments, the method further includes:
receiving third information sent by the second network function, where the third information is used to indicate an updated first threshold;
performing admission control of the network slice for the first PDU session based on a comparison result between the first number and a third threshold, and the third threshold is an updated value of the first threshold.

In the foregoing embodiments, when the capacity of the local first network function is exceeded, a request for admission control is sent to the second network function with higher capacity. The first threshold is adjusted by the second network function, and through hierarchical admission control, the communication requirements of the terminal are met and the user experience is enhanced.

With reference to some embodiments of the first aspect, in some embodiments, the method further includes:
receiving fourth information sent by the second network function, where the fourth information is used to indicate whether the second network function allows establishing the first PDU session in the network slice.

In the above embodiments, when the capacity of the local first network function is exceeded, a request for admission control is sent to the second network function with higher capacity. Through hierarchical admission control, the communication requirements of the terminal are met, and the user experience is enhanced.

With reference to some embodiments of the first aspect, in some embodiments, the first number is the bio tactile number of second PDU sessions established in the first network function for the network slice, and the first threshold is at least one of the following: a PDU session quota number of the network slice in the first network function, a PDU session number threshold of the network slice in the first network function, and a maximum PDU session number of the network slice in the first network function.

In the above embodiments, the decision on whether to allow the admission of the first PDU session is made by using different types of second thresholds, which improves the flexibility of the admission control.

With reference to some embodiments of the first aspect, in some embodiments, the first number is associated with the service area of the network slice; and
the first threshold is associated with the service area of the network slice.

In the above embodiments, the decision on whether to allow the admission of the first PDU session is made by using different types of second thresholds, which improves the flexibility of the admission control.

With reference to some embodiments of the first aspect, in some embodiments, the method further includes at least one of the following:
removing a count of the first PDU session from the first number; and
deregistering the first PDU session from the service group associated with the first PDU session in the network slice;
where the first information further indicates to release the first PDU session from the network slice.

In the above embodiments, the number of PDU sessions is updated in real time, which improves the timeliness of information and the accuracy of admission control.

With reference to some embodiments of the first aspect, in some embodiments, the method further includes:
removing an identifier of a service group not registered with a PDU session from the first network function.

In the foregoing embodiments, the identifier of the service group not registered with any PDU session is deleted from the first network function, which reduces invalid content in the first network function and improves the working efficiency of the first network function.

With reference to some embodiments of the first aspect, in some embodiments, the method further includes: sending fifth information to the third network function, where the fifth information is used to indicate at least one of the following:
a result of performing admission control of the network slice;
a reason for failing to be established to the network slice;
whether a maximum number of established second PDU sessions in the network slice is reached; and
whether a number of registered service groups in the network slice reaches a maximum number.

In the above embodiments, the first network function feeds back the admission control result to the third network function, and the third network function can perform subsequent control based on the admission control result, to improve communication reliability.

In the above embodiments, through the first information, the first network function can determine the service group associated with the terminal, and further perform access control based on the service group, to improve the consistency of the admission control policy for PDU sessions related to the service group in the admission control and enhance the user experience.

With reference to some embodiments of the first aspect, in some embodiments, the first network function is configured to perform admission control for the network slice within the service area associated with the first network function.

The second network function is configured to perform admission control for the network slice within the service area associated with the second network function, where the service area associated with the second network function includes the service area associated with the first network function.

The third network function is configured to send the first information to the first network function based on an operation request from the terminal. With reference to some embodiments of the first aspect, in some embodiments, the first network function is a local network slice admission control function (NSACF), the second network function is a primary NSACF, and the third network function is an access and mobility management function (AMF).

In a second aspect, an embodiment discloses an information transmission method, where the method is performed by a second network function, and the method includes:
receiving second information sent by a first network function, where the second information is used to indicate the second network function to perform admission control of a network slice for a first PDU session, where the first PDU session is associated with a service group.

In the above embodiment, during the admission control, at least the service group of the PDU session can be taken into account to adjust the admission manner, to improve the consistency of the admission control policy for the PDU sessions related to the service group in the admission control and enhance the user experience.

With reference to some embodiments of the second aspect, the second information is sent by the first network function when the first network function performs admission control of the network slice for the first PDU session and determines that a first number of second PDU sessions already established in the first network function for the network slice is greater than a first threshold.

In the above embodiments, during the admission control, at least the service group of the PDU session can be taken into account to adjust the admission method, to improve the consistency of the admission control policy for PDU sessions related to the service group in the admission control and enhance user experience. In the case that the capacity of the local first network function is exceeded, admission control is requested from a second network function with higher capacity. Through hierarchical admission control, the communication requirements of the terminal are met, and user experience is enhanced.

With reference to some embodiments of the second aspect, in some embodiments, the method further includes:
performing admission control of the network slice for the first PDU session based on a comparison result between a third number of third PDU sessions already established in the second network function for the network slice and a fourth threshold; or
sending third information to the first network function, where the third information is used to indicate an updated first threshold, and the updated first threshold is used by the first network function to compare with the first threshold and determine to perform admission control of the network slice for the first PDU session.

In the above embodiments, during the admission control, admission control is performed based on the number of PDU sessions in the network slice, which reduces situations where the network slice capacity is exceeded, improves communication stability, and enhances user experience.

In the above embodiments, in the case that the capacity of the local first network function is exceeded, admission control is requested from a second network function with higher capacity. The first threshold is adjusted by the second network function, and through hierarchical admission control, the communication requirements of the terminal are met and the user experience is enhanced.

With reference to some embodiments of the second aspect, in some embodiments, the method further includes:
in response to the third number being less than or equal to the fourth threshold, establishing the first PDU session in the network slice; or
in response to the third number being greater than the fourth threshold, not allowing establishing the first PDU session in the network slice.

In the above embodiments, during the admission control procedure, admission control is performed based on the number of PDU sessions in the network slice, which reduces situations where the network slice capacity is exceeded and improves communication stability.

With reference to some embodiments of the second aspect, in some embodiments, the method further includes:
in response to that the service group associated with the first PDU session is registered for the network slice in the second network function, establishing the first PDU session in the service group associated with the first PDU session; or
in response to that the service group associated with the first PDU session is not registered for the network slice in the second network function, and a second number of service groups already registered in the second network function for the network slice is less than or equal to a second threshold, registering the service group associated with the first PDU session at the second network function.

In the above embodiments, during the admission control, at least the service group of the PDU session can be taken into account to adjust the admission manner, to improve the consistency of the admission control policy for the PDU sessions related to the service group in the admission control and enhance the user experience.

With reference to some embodiments of the second aspect, in some embodiments, the method further includes:
sending fourth information to the first network function, where the fourth information is used to indicate whether the second network function allows establishing the first PDU session in the network slice.

In the above embodiments, in the case that the capacity of the local first network function is exceeded, admission control is requested from a second network function with higher capacity. Through hierarchical admission control, the communication requirements of the terminal are met and the user experience is enhanced.

With reference to some embodiments of the second aspect, in some embodiments, the third number is the number of second PDU sessions established in the second network function for the network slice, and the fourth threshold is at least one of the following: a PDU session quota number of the network slice in the second network function, a PDU session number threshold of the network slice in the second network function, and a maximum PDU session number of the network slice in the second network function.

In the above embodiments, the decision on whether to allow PDU session admission is made by using different types of fourth thresholds, which improves the flexibility of admission control.

With reference to some embodiments of the second aspect, in some embodiments, the first number is the number of second PDU sessions established in the first network function for the network slice, and the first threshold is at least one of the following: a PDU session quota number of the network slice in the first network function, a PDU session number threshold of the network slice in the first network function, and a maximum PDU session number of the network slice in the first network function.

In the above embodiments, the decision on whether to allow PDU session admission is made by using different types of second thresholds, which improves the flexibility of admission control.

With reference to some embodiments of the second aspect, in some embodiments, the second information is further used to indicate at least one of the following:
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

In the above embodiments, through the second information, the second network function can determine the service group associated with the PDU session, and further perform access control based on the service group, to improve the consistency of the admission control policy for the first PDU session(s) related to the service group in the admission control and enhance user experience.

In a third aspect, an embodiment discloses an information transmission method, where the method is executed by a third network function, and the method includes:
sending first information to a first network function, where the first information is used to indicate the first network function to perform admission control of a network slice for a first PDU session, and the first PDU session is associated with a service group.

In the above embodiment, during the admission control, at least the service group of the PDU session can be taken into account to adjust the admission manner, to improve the consistency of the admission control policy for PDU sessions related to the service group in the admission control and enhance user experience.

With reference to some embodiments of the third aspect, in some embodiments, the first information is further used to indicate at least one of the following:
the first network function releasing the first PDU session from the network slice;
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

In the foregoing embodiments, during the admission control, at least the service group of the PDU session can be taken into account to adjust the admission manner, to improve the consistency of the admission control policy for PDU sessions related to the service group during the establishment and release processes and enhance user experience.

With reference to some embodiments of the third aspect, in some embodiments, the first network function performs admission control of the network slice based on a comparison result between a first number of second PDU sessions already established in the first network function for the network slice and a first threshold.

In the above embodiments, during the admission control procedure, admission control is performed based on the number of PDU sessions in the network slice, which reduces situations where the network slice capacity is exceeded, improves communication stability, and enhances user experience.

With reference to some embodiments of the third aspect, in some embodiments, in response to the first number being less than or equal to the first threshold, the first network function establishes the first PDU session in the network slice; and/or
in response to the first number being greater than the first threshold, the first network function sends second information to a second network function, where the second information is used to indicate the second network function to perform admission control associated with the network slice for the first PDU session.

In the above embodiments, during the admission control procedure, admission control is performed based on the number of PDU sessions in the network slice, which reduces situations where the network slice capacity is exceeded and improves communication stability. In the case that the capacity of the local first network function is exceeded, admission control is requested from the second network function with higher capacity. Through hierarchical admission control, the communication requirements of the terminal are met, and user experience is enhanced.

With reference to some embodiments of the third aspect, in some embodiments, the second information is further used to indicate at least one of the following:
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

In the foregoing embodiments, through the second information, the second network function can determine the service group associated with the PDU session, and further perform access control based on the service group, to improve the consistency of the admission control policy for PDU sessions related to the service group in the admission control and enhance user experience.

With reference to some embodiments of the third aspect, in some embodiments, the admission control of the network slice performed by the first network function is determined by the first network function based on a comparison result of the first number and an updated first threshold, where the updated first threshold is indicated by third information sent by the second network function to the first network function based on the second information.

In the above embodiments, in the case that the capacity of the local first network function is exceeded, admission control is requested from the second network function with higher capacity. The first threshold is adjusted by the second network function, and through hierarchical admission control, the communication requirements of the terminal are met and the user experience is enhanced.

With reference to some embodiments of the third aspect, in some embodiments, the first number is the number of second PDU sessions established in the first network function for the network slice, and the first threshold is at least one of the following: a PDU session quota number of the network slice in the first network function, a PDU session number threshold of the network slice in the first network function, and a maximum PDU session number of the network slice in the first network function. In the above embodiments, the decision on whether to allow PDU session admission is made by using different types of second thresholds, which improves the flexibility of admission control.

With reference to some embodiments of the third aspect, in some embodiments, the method further includes:
receiving fifth information sent by the first network function, where the fifth information is used to indicate at least one of following:
a result of performing admission control of the network slice for the first PDU session;
a reason for failing to be established to the network slice;
whether a maximum number of established second PDU sessions in the network slice is reached; and
whether a maximum number of registered service groups in the network slice is reached.

In the above embodiments, the first network function feeds back the admission control result to the third network function, and the third network function can perform subsequent control based on admission control result, to improve communication reliability.

With reference to some embodiments of the third aspect, in some embodiments, the result of performing admission control of the network slice for the first PDU session is indicated by the second network function to the first network function via fourth information.

In the above embodiments, through the first information, the first network function can determine the service group associated with the first PDU session, and further perform access control based on the service group, to improve the consistency of the admission control policy for the first PDU session(s) related to the service group in the admission control and enhance user experience.

With reference to some embodiments of the third aspect, in some embodiments, the method further includes: determining the service group to which the first PDU session belongs based on at least one of the following:
a local configuration of the third network function;
an operation administration and maintenance (OAM) configuration of the third network function;
unified data management (UDM) subscription information of a terminal associated with the first PDU session;
a service capability of a terminal associated with the first PDU session;
service group information corresponding to a permanent equipment identifier (PEI) of a terminal associated with the first PDU session.

In the foregoing embodiments, the service group associated with the PDU session is determined by the third network function, enabling the first network function and/or the second network function to take the service group of the PDU session into account when performing admission control. This improves the consistency of the admission control policy for PDU sessions related to the service group in the admission control and enhances user experience.

In a fourth aspect, an embodiment discloses an information transmission method, where the method is performed by a communication system and includes:
sending, by the third network function, first information to the first network function, where the first information is used to indicate the first network function to perform admission control of a network slice for a first PDU session, where the first PDU session is associated with a service group.

In a fifth aspect, an embodiment discloses an information transmission apparatus, where the device includes:
a transceiver module, configured to receive first information sent by a third network function, where the first information is used to indicate the first network function to perform admission control of a network slice for a first PDU session, and the first PDU session is associated with a service group.

With reference to some embodiments of the fifth aspect, in some embodiments, the first information is further used to indicate at least one of the following:
the first network function releasing the first PDU session from the network slice;
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

With reference to some embodiments of the fifth aspect, in some embodiments, the first information indicates establishing the first PDU session in the network slice, and the apparatus further includes:
a processing module, configured to perform admission control of the network slice for the first PDU session based on a comparison result between a first number of second PDU sessions already established in the first network function for the network slice and a first threshold.

With reference to some embodiments of the fifth aspect, in some embodiments, the processing module is configured to: in response to the first number being less than or equal to the first threshold, establish the first PDU session in the network slice; or
the transceiver module is configured to: in response to the first number being greater than the first threshold, send second information to a second network function, where the second information is used to indicate the second network function to perform admission control associated with the network slice for the first PDU session.

With reference to some embodiments of the fifth aspect, in some embodiments, the processing module is specifically configured to perform one of the following:
in response to that the service group associated with the first PDU session is registered for the network slice in the first network function, establishing the first PDU session in the service group associated with the first PDU session; or
in response to that the service group associated with the first PDU session is not registered for the network slice in the first network function, and a second number of service groups already registered in the first network function for the network slice is less than or equal to a second threshold, registering the service group associated with the first PDU session in the first network function.

With reference to some embodiments of the fifth aspect, in some embodiments, the second information is further used to indicate at least one of the following:
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

With reference to some embodiments of the fifth aspect, in some embodiments, the transceiver module is further configured to receive third information sent by the second network function, where the third information is used to indicate an updated first threshold.

The processing module is further configured to perform admission control of the network slice for the first PDU session based on a comparison result between the first number and a third threshold, and the third threshold is an updated value of the first threshold.

With reference to some embodiments of the fifth aspect, in some embodiments, the transceiver module is further configured to: receive fourth information sent by the second network function, where the fourth information is used to indicate whether the second network function allows establishing the first PDU session in the network slice.

With reference to some embodiments of the fifth aspect, in some embodiments, the first number is the number of second PDU sessions established in the first network function for the network slice, and the first threshold is at least one of the following: a PDU session quota number of the network slice in the first network function, a PDU session number threshold of the network slice in the first network function, and a maximum PDU session number of the network slice in the first network function.

With reference to some embodiments of the fifth aspect, in some embodiments, the first number is associated with a service area of the network slice; and
the first threshold is associated with the service area of the network slice.

With reference to some embodiments of the fifth aspect, in some embodiments, the first information indicates to release the first PDU session from the network slice, and the processing module is further configured to perform at least one of the following:
removing a number of the first PDU session from the first number; and
deregistering the first PDU session from the service group associated with the first PDU session in the network slice.

With reference to some embodiments of the fifth aspect, in some embodiments, the processing module is further configured to:
remove an identifier of a service group not registered with a PDU session from the first network function.

With reference to some embodiments of the fifth aspect, in some embodiments, the transceiver module is further configured to: send fifth information to the third network function, where the fifth information is used to indicate at least one of the following:
a result of performing admission control of the network slice;
a reason for failing to be established to the network slice;
whether a maximum number of established second PDU sessions in the network slice is reached; and
whether a maximum number of registered service groups in the network slice is reached.

With reference to some embodiments of the fifth aspect, in some embodiments, the first network function is a local NSACF, the second network function is a primary NSACF, and the third network function is an AMF.

In a sixth aspect, an embodiment discloses an information transmission apparatus, where the apparatus includes:
a transceiver module, configured to receive second information sent by a first network function, where the second information is used to indicate the second network function to perform admission control of a network slice for a first PDU session, where the first PDU session is associated with a service group.

With reference to some embodiments of the sixth aspect, in some embodiments, the second information is sent by the first network function when the first network function performs admission control of the network slice for the first PDU session and determines that a first number of second PDU sessions already established in the first network function for the network slice is greater than a first threshold.

With reference to some embodiments of the sixth aspect, in some embodiments, the apparatus further includes a processing module configured to perform admission control of the network slice for the first PDU session based on a comparison result between a third number of third PDU sessions already established in the second network function for the network slice and a fourth threshold; or
the transceiver module is further configured to send third information to the first network function, where the third information is used to indicate an updated first threshold, and the updated first threshold is used by the first network function to compare with the first threshold and determine to perform admission control of the network slice for the first PDU session.

With reference to some embodiments of the sixth aspect, in some embodiments, the processing module is specifically configured to perform at least one of the following:
in response to the third number being less than or equal to the fourth threshold, establishing the first PDU session in the network slice; or
in response to the third number being greater than the fourth threshold, not allowing establishing the first PDU session in the network slice.

With reference to some embodiments of the sixth aspect, in some embodiments, the processing module is specifically configured to perform one of the following:
in response to that the service group associated with the first PDU session is registered for the network slice in the second network function, establishing the first PDU session in the service group associated with the first PDU session; or
in response to that the service group associated with the first PDU session is not registered for the network slice in the second network function, and a second number of service groups already registered in the second network function for the network slice is less than or equal to a second threshold, registering the service group associated with the first PDU session at the second network function.

With reference to some embodiments of the sixth aspect, in some embodiments, the transceiver module is further configured to send fourth information to the first network function, where the fourth information is used to indicate whether the second network function allows establishing the first PDU session in the network slice.

With reference to some embodiments of the sixth aspect, in some embodiments, the third number is the number of second PDU sessions established by the network slice in the second network function, and the fourth threshold is at least one of the following: a PDU session quota number of the network slice in the second network function, a PDU session number threshold of the network slice in the second network function, and a maximum PDU session number of the network slice in the second network function.

With reference to some embodiments of the sixth aspect, in some embodiments, the first number is the number of second PDU sessions established in the first network function for the network slice, and the first threshold is at least one of the following: a PDU session quota number of the network slice in the first network function, a PDU session number threshold of the network slice in the first network function, and a maximum PDU session number of the network slice in the first network function.

With reference to some embodiments of the sixth aspect, in some embodiments, the second information is further used to indicate at least one of the following:
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

In a seventh aspect, an embodiment discloses an information transmission apparatus, where the apparatus includes:
a transceiver module, configured to send first information to a first network function, where the first information is used to indicate the first network function to perform admission control of a network slice for a first PDU session, and the first PDU session is associated with a service group.

With reference to some embodiments of the seventh aspect, in some embodiments, the first information is also used to indicate at least one of the following:
the first network function releasing the first PDU session from the network slice;
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

With reference to some embodiments of the seventh aspect, in some embodiments, the first network function performs admission control of the network slice based on a comparison result between a first number of second PDU sessions already established in the first network function for the network slice and a first threshold.

With reference to some embodiments of the seventh aspect, in some embodiments, in response to the first number being less than or equal to the first threshold, the first network function establishes the first PDU session in the network slice; and/or
in response to the first number being greater than the first threshold, the first network function sends second information to a second network function, where the second information is used to indicate the second network function to perform admission control associated with the network slice for the first PDU session.

With reference to some embodiments of the seventh aspect, in some embodiments, the second information is further used to indicate at least one of the following:
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
the admission control indication for indicating to release the first PDU session from the network slice;
service area information of the network slice; and
valid time information of the network slice.

With reference to some embodiments of the seventh aspect, in some embodiments, the admission control of the network slice performed by the first network function is determined by the first network function based on a comparison result of the first number and an updated first threshold, where the updated first threshold is indicated by third information sent by the second network function to the first network function based on the second information.

With reference to some embodiments of the seventh aspect, in some embodiments, the first number is the number of second PDU sessions established in the first network function for the network slice, and the first threshold is at least one of the following: a PDU session quota number of the network slice in the first network function, a PDU session number threshold of the network slice in the first network function, and a maximum PDU session number of the network slice in the first network function.

With reference to some embodiments of the seventh aspect, in some embodiments, the transceiver module is further configured to receive fifth information sent by the first network function, where the fifth information is used to indicate at least one of the following:
a result of performing admission control of the network slice for the first PDU session;
a reason for failing to be established to the network slice;
whether a maximum number of established second PDU sessions in the network slice is reached; and
whether a maximum number of registered service groups in the network slice is reached.

With reference to some embodiments of the seventh aspect, in some embodiments, the result of performing admission control of the network slice for the first PDU session is indicated by the second network function to the first network function via fourth information.

With reference to some embodiments of the seventh aspect, in some embodiments, the apparatus further includes: a processing module configured to determine the service group to which the first PDU session belongs based on at least one of the following:
a local configuration of the third network function;
an operation administration and maintenance (OAM) configuration of the third network function;
unified data management (UDM) subscription information of a terminal associated with the first PDU session;
a service capability of a terminal associated with the first PDU session;
service group information corresponding to a permanent equipment identifier (PEI) of a terminal associated with the first PDU session.

In an eighth aspect, an embodiment discloses a communication system, including:
a first network function, configured to implement the information transmission method described in the first aspect;
a second network function, configured to implement the information transmission method described in the second aspect;
a third network function, configured to implement the information transmission method described in the third aspect.

In a ninth aspect, an embodiment discloses a communication device, where the communication device includes:
one or more processors;
where the processor is configured to invoke instructions to cause the communication device to execute the information transmission method according to the first, second, or third aspect of the claims.

In a tenth aspect, an embodiment discloses a storage medium, where the storage medium stores instructions that, when executed on a communication device, cause the communication device to perform the information transmission method described in the first, second, or third aspect.

It can be understood that the aforementioned access network device, terminal, communication devices, communication system, storage medium, program product, and computer program are all configured to execute the methods provided in the embodiments of the present disclosure. Therefore, for the beneficial effects they can achieve, reference may be made to the beneficial effects in the corresponding methods, which will not be repeated here.

The embodiments of the present disclosure provide information transmission methods and apparatuses, a communication device, a communication system, and a storage medium. In some embodiments, the terms "information transmission method", "information processing method" and the like may be used interchangeably; the terms information "transmission apparatus", "information processing apparatus" and the like may be used interchangeably; and the terms "communication system", "information processing system" and the like may be used interchangeably.

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined. In addition, the various embodiments may be arbitrarily combined. For example, some or all steps of different embodiments may be arbitrarily combined, and a certain embodiment may be arbitrarily combined with the optional implementation manners of other embodiments.

In various embodiments of the present disclosure, unless otherwise specified or existing logical contradictions, the terms and/or descriptions between the various embodiments are consistent and can be referred to each other. The technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "the above-mentioned", "said", "the aforesaid", "this", etc., may mean "one and only one", and may also mean "one or more", "at least one", etc. For example, when articles such as "a", "an" and "the" in English are used in translation, the noun following the article may be understood as a singular expression or a plural expression.

In the embodiments of the present disclosure, "plurality" refers to two or more.

In some embodiments, terms such as "at least one of", "one or more", "a plurality of", and "multiple" may be replaced with one another.

In some embodiments, expressions like "at least one of A and B", "A and/or B", "A in one case and B in another case", and "in response to case A and in response to another case B" may include the following technical solutions depending on the situation: in some embodiments, A (executing A independently of B); in some embodiments, B (executing B independently of A); in some embodiments, execution is selected from A and B (A and B are optionally executed); in some embodiments, A and B (both A and B are executed). The same applies when there are more alternatives such as A, B, and C.

In some embodiments, expressions such as "A or B" may include the following technical solutions depending on the situation: in some embodiments, A (executing A independently of B); in some embodiments, B (executing B independently of A); in some embodiments, execution is selected from A and B (A and B are optionally executed). The same applies when there are more alternatives such as A, B, and C.

In the embodiments of the present disclosure, prefixes such as "first" and "second" are only used to distinguish different described objects, and do not constitute any restriction on the position, order, priority, quantity, content, or other aspects of the described objects. For statements about the described objects, reference shall be made to the descriptions in the context of the claims or the embodiments, and no redundant limitation shall be constituted due to the use of these prefixes. For example, if the described object is a "field", the ordinal numbers before "field" in "first field" and "second field" do not limit the position or order between the "fields"; "first" and "second" do not restrict whether the "fields" they modify are in the same message, nor do they limit the sequence order between the "first field" and the "second field". For another example, if the described object is a "level", the ordinal numbers before the "level" in "first level" and "second level" do not limit the priority between the "levels". For yet another example, the quantity of the described object is not limited by the ordinal number, and may be one or more. Taking the "first apparatus" as an example, the quantity of the "apparatus" therein may be one or more. In addition, objects modified by different prefixes may be the same or different. For instance, if the described object is an "apparatus", the "first apparatus" and the "second apparatus" may be the same apparatus or different apparatuses, and their types may be the same or different; for another example: if the described object is "information", the "first information" and the "second information" may be the same information or different information, and their contents may be the same or different.

In some embodiments, expressions such as "including A", "containing A", "used to indicate A", and "carrying A" can be interpreted as directly carrying A, and can also be interpreted as indirectly indicating A.

In some embodiments, terms such as "...", "determining that...", "in the case of...", "when...", "in the case that...", "if...", and "in the event that..." may be replaced with one another.

In some embodiments, terms such as "greater than", "greater than or equal to", "not less than", "more than", "more than or equal to", "no less than", "higher than", "higher than or equal to", "not lower than", and "above" may be replaced with one another; terms such as "less than", "less than or equal to", "not greater than", "fewer than", "fewer than or equal to", "no more than", "lower than", "lower than or equal to", "not higher than", and "below" may be replaced with one another.

In some embodiments, terms such as "apparatus" may be interpreted as either physical or virtual entities, and their names are not limited to those recorded in the embodiments. Terms including "apparatus", "equipment", "device", "circuit", "network function", "node", "function", "unit", "section", "system", "network", "chip", "chip system", "entity", and "subject" may be replaced with one another.

In some embodiments, "network" may be interpreted as apparatuses included in a network (e.g., access network devices, core network devices, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" may be replaced with one another.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" may be replaced with one another.

In some embodiments, an access network device, a core network device, or a network device may be replaced with a terminal. For example, the various embodiments of the present disclosure may also be applied to a structure in which the communication between an access network device, a core network device, or a network device and a terminal is replaced with communication between multiple terminals (for example, this may also be referred to as device-to-device (D2D), vehicle-to-everything (V2X), etc.). In this case, a structure in which the terminal has all or part of the functions of the access network device may also be adopted. In addition, terms such as "uplink" and "downlink" may also be replaced with terms corresponding to inter-terminal communication (for example, "side"). For example, the uplink channel, the downlink channel, etc., may be replaced with a side channel, and the uplink, the downlink, etc., may be replaced with a sidelink.

In some embodiments, a terminal may be replaced with an access network device, a core network device, or a network device. In this case, a structure may also be adopted in which the access network device, the core network device, or the network device has all or part of the functions of a terminal.

In some embodiments, obtaining data, information, etc., may comply with the laws and regulations of the country where it is obtained.

In some embodiments, data, information, etc., may be obtained after acquiring the user's consent.

In addition, each element, each row, or each column in the tables of the embodiments of the present disclosure may be implemented as an independent embodiment, and any combination of any element, any row, or any column may also be implemented as an independent embodiment.

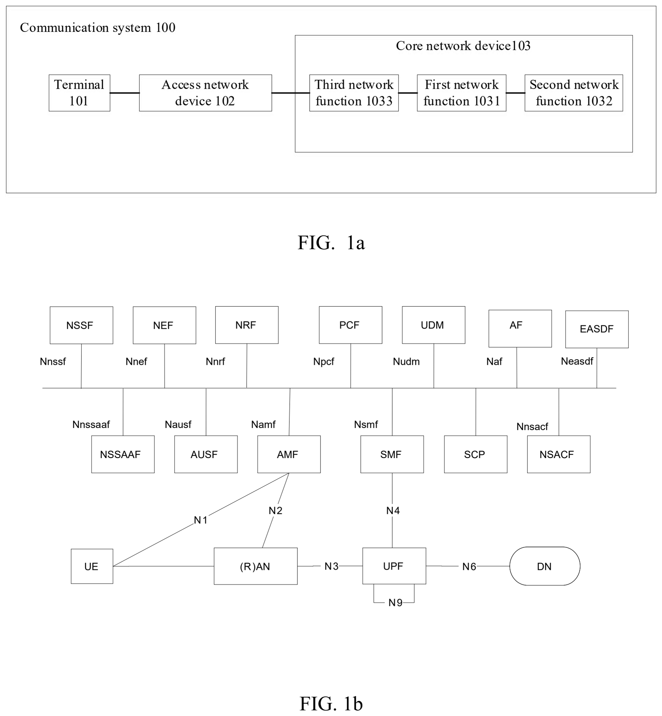

FIG. 1a is a schematic diagram of the architecture of a communication system according to an embodiment of the present disclosure.

As shown in FIG. 1a, the communication system 100 includes a terminal 101 and an access network device 102.

In some embodiments, the terminal 101 includes, for example, at least one of a mobile phone, a wearable device, an Internet of Things (IoT) device, a vehicle with communication functionality, an intelligent vehicle, a tablet computer (Pad), a computer with wireless transceiving functionality, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, an access network device 102 is, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open radio access network(Open RAN), a cloud radio access network (Cloud RAN), a base station in other communication systems, and an access node in a wireless fidelity (WiFi) system, but is not limited thereto.

In some embodiments, the technical solutions of the present disclosure may be applied to the Open RAN architecture. In this case, the interfaces between access network devices or within an access network device involved in the embodiments of the present disclosure may become internal interfaces of the Open RAN, and the processes and information exchange between these internal interfaces can be implemented through software or programs.

In some embodiments, an access network device may be composed of a central unit (CU) and distributed units (DUs). The CU may also be referred to as a control unit. The adoption of the CU-DU structure may split the protocol layers of the access network device, with functions of some protocol layers being placed in the CU for centralized control, and the functions of the remaining part or all of the protocol layers being distributed in the DUs, which are centrally controlled by the CU, but is not limited thereto.

In some embodiments, the communication system 100 may further include a core network device 103. The core network may include, for example, at least one of an evolved packet core (EPC), a 5G core network (5GCN), and a next generation core (NGC).

The core network equipment 103 includes a first network function 1031, a first network function 1032, and a first network function 1033.

In some embodiments, the first network function includes a local network slice admission control function (NSACF) in the core network device 103.

In some embodiments, the second network function includes: a primary network slice admission control function (NSACF) in the core network device 103.

In some embodiments, the third network function may include: an access and mobility management function (AMF) of the core network device 103.

As shown in FIG. 1b, the core network device 103 specifically includes multiple network functions, which may include but are not limited to: (1) an access and mobility management function (AMF): responsible for user access and mobility management; (2) a session management function (SMF): responsible for user session management; (3) a network slice admission control function (NSACF): responsible for performing admission control on network slices; (4) a user plane function (UPF): responsible for user plane processing; (5) an authentication server function (AUSF): responsible for authenticating user access via 3rd generation partnership project (3GPP) and non-3GPP access; (6) a policy control function (PCF): responsible for user policy control, including session policy and mobility policy; (7) a unified data management (UDM): responsible for user subscription data management; (8) a network slice selection function (NSSF): responsible for selecting the network slice to be adopted for user services; (9) NSACF: responsible for admission control of network slice selection, etc. Nnsacf, Nnssf, Nnssaaf, Nausf, Nnef, Namf, Npcf, Nnrf, Nsmf, Nudm, Naf, N1, N2, N3, N4, and N6 are all interface serial numbers. For example, the meaning of each interface in FIG. 1b may refer to the definitions specified in the 3GPP standard protocols, which are not specifically limited in the embodiments of the present disclosure.

It can be understood that the communication system described in the embodiments of the present disclosure is intended to more clearly illustrate the technical solutions of the embodiments of the present disclosure, and does not constitute a limitation on the technical solutions provided by the embodiments of the present disclosure. One of ordinary skills in the art can know that, with the evolution of system architectures and the emergence of new service scenarios, the technical solutions provided by the embodiments of the present disclosure are also applicable to similar technical problems.

The following embodiments of the present disclosure may be applied to the communication system 100 shown in FIG. 1a, or some entities thereof, but are not limited thereto. The various entities shown in FIG. 1a are illustrative only. The communication system may include all or part of the entities in FIG. 1a, and may also include other entities not shown in FIG. 1a. The numbers and forms of various entities are arbitrary. The connection relationships between the entities are illustrative only. The entities may be unconnected or connected, and the connection may be in any manner, which may be a direct connection or an indirect connection, a wired connection or a wireless connection.

Various embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G New Radio (NR), Future Radio Access (FRA), New-Radio Access Technology (New-RAT), New Radio (NR), New Radio Access (NX), Future Generation Radio Access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wide Band (UWB), Bluetooth (registered trademark), Public Land Mobile Network (PLMN), Device-to-Device (D2D) systems, Machine-to-Machine (M2M) systems, Internet of Things (IoT) systems, Vehicle-to-Everything (V2X), systems using other communication methods, next-generation systems extended based on these, etc. In addition, multiple systems (for example, a combination of LTE or LTE-A and 5G, etc.) may also be combined for application.

The various data flows of XR multimodal services have strong correlation, and in many scenarios, the data flows of such services are distributed across multiple UEs. The NSAC function adopted in the 5GS system, which performs admission control based on the number of active sessions in the network, cannot support the multi-UE group admission function required for these XR multimodal services. Consequently, the inconsistency in admission control policies for UEs associated with XR multimodal services results in the network being unable to guarantee the user experience of XR multimodal services, and even failing to ensure the normal provision of such services under specific scenarios.

The inconsistency in admission control policies for PDU sessions of UEs associated with XR multimodal services leads to the network being unable to guarantee the user experience of XR multimodal services, and even failing to ensure the normal provision of such services under specific scenarios. How to effectively enhance the network slice admission control for PDU sessions of UEs associated with XR multimodal services, achieve consistent admission control policies for PDU sessions of UEs associated with XR multimodal services, and especially implement admission control for PDU sessions of XR service groups under the hierarchical NSACF architecture, has become the problem to be solved by the present invention.

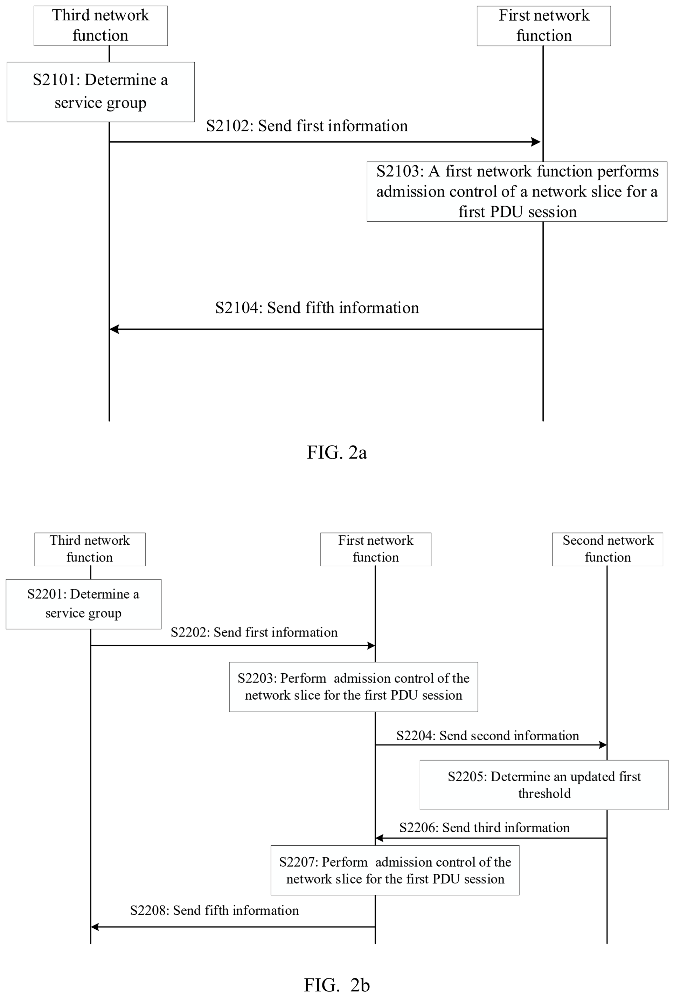

FIG. 2a is an interaction diagram of an information transmission method according to an embodiment of the present disclosure. As shown in FIG. 2a, the embodiment of the present disclosure relates to an information transmission method, which is applied to a communication system 100 and the method includes the following.

In step S2101, the third network function determines a service group.

In some embodiments, the third network function may include: a session management function (SMF) in the core network.

In some embodiments, a service group may include an application group corresponding to a service.

In some embodiments, the service group may include: an XR service group.

In some embodiments, the third network function determining the service group includes the third network function determining the identifier of the service group.

In some embodiments, the identifier of the service group includes at least one of the following: an internal group identifier, a standardized general group identifier.

In some embodiments, the first PDU sessions in the service group may be associated with the same service.

For example, the first PDU sessions in the service group may be associated with the same XR service.

In some embodiments, the identifier of the service group may indicate the XR service group or application group to which the first PDU session(s) belong.

In some embodiments, the third network function determines the service group to which the first PDU session(s) belong based on one of the following:
a local configuration of the third network function;
an operation administration and maintenance (OAM) configuration of the third network function;
a unified data management (UDM) subscription information of the terminal(s) associated with the first PDU session(s);
service capabilities of the terminal(s) associated with the first PDU session(s); and
service group information corresponding to the permanent equipment identifier (PEI) of the terminal(s) associated with the first PDU session(s).

In some embodiments, Step S2101 is omitted. The terminal may send its own service group identifier to the third network function to indicate the service group, or the aforementioned function is set as default.

In step S2102, the third network function sends the first information.

In some embodiments, the third network function sends the first information to the first network function.

In some embodiments, the first network function is configured to perform admission control on the network slice within the service area associated with the first network function.

The second network function is configured to perform admission control on the network slice within the service area associated with the second network function, where the service area associated with the second network function includes the service area associated with the first network function.

The third network function is configured to send the first information to the first network function based on an operation request from the terminal, where the operation request may include a request for establishing the first PDU session, a request for releasing the first PDU session, and so on.

In some embodiments, admission control includes network slice admission control (NSAC).

In some embodiments, the first network function includes a local network slice admission control function (NSACF) in the core network.

In some embodiments, the second network function includes the primary network slice admission control function (NSACF) in the core network.

In some embodiments, the first information includes but is not limited to at least one of the following: a first PDU session establishment request, a first PDU session release request, and an update request for the number of established second PDU sessions.

In some embodiments, the first network function is configured to perform admission control on the first PDU session(s) within the service area corresponding to the first network function.

In some embodiments, the first network function corresponds to at least one service area.

In some embodiments, the second network function is configured to perform global management of one or more first network functions.

In some embodiments, the service area associated with the second network function includes the service area associated with the first network function.

In some embodiments, the first information is used to instruct the first network function to perform network slice admission control operations for the first PDU session(s).

In some embodiments, the first information may indicate, via S-NSSAI, the network slice for which the admission operation is to be performed.

In some embodiments, the first information is triggered by the PDU session establishment procedure and/or PDU session release procedure for a network slice initiated by the terminal.

In some embodiments, the first information carries the content included in the establishment request information sent by the terminal, such as the terminal identifier.

In some embodiments, the terminal may initiate a PDU session establishment procedure for one or more network slices.

In some embodiments, the first information may instruct the first network function to perform at least one network slice admission control operation for the first PDU session(s).

In some embodiments, the first information is used to instruct the first network function to perform service group-based admission control for the first PDU session(s).

In some embodiments, when the SMF does not send the identifier of the service group associated with the first PDU session(s) or the service group itself, the local NSACF may determine the identifier of the group or the service group associated with the PDU session according to the local configuration, OAM configuration, group identifier sent by the PCF, or identifier sent by the NEF.

In some embodiments, service group-based admission control includes but is not limited to at least one of the following:
the first network function establishing the first PDU session(s) into the service group associated with the first PDU session(s) in the network slice;
the first network function establishing the service group associated with the first PDU session(s) in the network slice, and establishing the first PDU session(s) into the service group associated with the first PDU session(s) in the network slice.

In some embodiments, if the SMF determines the peer NSACF, the SMF performs NSACF discovery and selection.

In some embodiments, the first information is further used to indicate at least one of the following:
the first network function releasing the first PDU session(s) from the network slice;
an identifier of the service group associated with the first PDU;
an identifier(s) of the first PDU session(s);
an authorized access type of the network slice;
an identifier of the network slice;
an identifier of the third network function;
an admission control instruction for indicating to establish the first PDU session(s) in the network slice;
an admission control instruction for indicating to release the first PDU session(s) from the network slice;
service area information of the network slice; and
valid time information of the network slice.

In some embodiments, the first information may be used to instruct the local NSACF to update the number of registered second PDU sessions.

In some embodiments, the first information may be triggered by the terminal, and the terminal may trigger the establishment of a PDU session and/or the release of the first PDU session.

In some embodiments, the terminal may send a PDU session establishment request to the SMF via the AMF, triggering the SMF to send the first information to the local NSACF to request the establishment of the PDU session in the network slice.

In some embodiments, the terminal may send a PDU session release request to the SMF via the AMF, triggering the SMF to send the first information to the local NSACF to request the release of the first PDU session in the network slice.

In some embodiments, the admission control triggers the first network function to update the number of established second PDU sessions in the network slice.

In some embodiments, the update of the number of PDU sessions includes at least one of the following: an increase in the number of established second PDU sessions in the network slice, and a decrease in the number of established second PDU sessions in the network slice.

In some embodiments, the admission control instruction may indicate the establishment of a PDU session in the network slice, i.e., indicating an increase in the number of PDU sessions in the network slice.

In some embodiments, the admission control instruction may indicate the release of a PDU session in the network slice, i.e., indicating a decrease in the number of PDU sessions in the network slice.

In some embodiments, the first information is carried in the nsacf_nsac_numofpdusupdate_request message and sent to the first network function.

In step S2103, the first network function performs network slice admission control for the first PDU session.

In some embodiments, the first network function performs network slice admission control for the first PDU session based on the comparison result between the first number of the established second PDU sessions in the network slice and the first threshold.

In some embodiments, when the first information indicates that the PDU session is to be established in the network slice, the first network function performs network slice admission control operations for the terminal based on the comparison result between the first number of the established second PDU sessions in the first network function and the first threshold.

In some embodiments, the first number of the established second PDU sessions in the first network function refers to the first number of the established second PDU sessions of the network slice in the first network function.

The first number is the number of established second PDU sessions in the first network function for the network slice, and the first threshold is at least one of the following: the PDU session quota number of the network slice in the first network function, the PDU session number threshold of the network slice in the first network function, and the maximum PDU session number of the network slice in the first network function.

In some embodiments, the PDU session quota number may be the allowable number of PDU sessions configured by the second network function for the first network function for the network slice.

In some embodiments, the PDU session number threshold may also be the allowable number of PDU sessions configured by the second network function for the first network function for the network slice.

In some embodiments, the PDU session number threshold is less than the PDU session quota number.

In some embodiments, the maximum PDU session number may refer to the maximum number of PDU sessions that the first network function can register for the network slice.

In some embodiments, the second network function is configured with the PDU session quota number of the network slice in the first network function, and the PDU session quota number is the maximum PDU session number of the network slice in the first network function.

In some embodiments, the first number is associated with the service area of the network slice.
the first threshold is associated with the service area of the network slice. One network slice may correspond to one or more service areas.

In some embodiments, a first threshold corresponding to a service area is configured for different service areas.

In some embodiments, if the first network function is configured with a first threshold corresponding to a service area, it may determine whether to allow the establishment of the first PDU session based on the comparison result between the first number of the established second PDU sessions in the service area and the first threshold corresponding to the service area.

In some embodiments, if the first number is less than or equal to the first threshold, the first PDU session is established in the network slice.

In some embodiments, the first number being less than or equal to the first threshold includes at least one of the following:
the first number being less than or equal to the PDU session quota number;
the first number being less than or equal to the PDU session number threshold;
the first number being less than or equal to the maximum PDU session number;
the first number being greater than or equal to the PDU session number threshold and less than or equal to the maximum PDU session number;
the first number being greater than or equal to the PDU session number threshold and less than or equal to the PDU session quota number.

In some embodiments, establishing the first PDU session in the network slice includes: creating the first PDU session into the service group corresponding to the first PDU session in the network slice.

In some embodiments, if it is determined that the first PDU session is to be established in the network slice, and the first network function is configured with a second threshold, then the first network function determines whether to register the service group associated with the first PDU session in the network slice based on the comparison result between the second number of the service groups registered for the network slice in the first network function and the second threshold.

In some embodiments, the method further includes:
if the service group associated with the first PDU session has been registered for the network slice in the first network function, establishing the first PDU session in the service group associated with the first PDU session; or
if the service group associated with the first PDU session has not been registered for the network slice in the first network function, and the second number of the service groups already registered for the network slice in the first network function is less than or equal to the second threshold, registering the service group associated with the first PDU session in the first network function.

In some embodiments, after registering the service group associated with the first PDU session in the first network function, the first network function creates the first PDU session into the service group.

In some embodiments, the second threshold includes one of the following:
the service group number threshold for the network slice configured by the second network function for the first network function;
the service group quota number for the network slice configured by the second network function for the first network function.

In some embodiments, if the establishment of the first PDU session is permitted and the identifier of the service group indicated by the first information already exists in the registered list of the first network function, a new entry for the first PDU session is added under the service group identifier, and the number of registered service groups remains unchanged.

In some embodiments, if the establishment of the first PDU session is permitted and the identifier of the service group indicated by the first information does not exist in the registered list of the first network function, the identifier of the service group is added to the registered list, the number of registered service groups is increased, and a new entry for the first PDU session is added under the identifier of the service group.

In some embodiments, if it is determined that the first PDU session is to be established in the network slice and the first network function is not configured with a second threshold, the first network function performs at least one of the following operations:
if the service group associated with the first PDU session has been registered for the network slice in the first network function, registering the first PDU session into the service group associated with the terminal for the network slice in the first network function;
if the service group associated with the first PDU session has not been registered for the network slice in the first network function, registering the service group associated with the first PDU session in the first network function.

For example, the first network function is configured with a PDU session number threshold and a maximum PDU session number of the network slice locally (i.e., in the first network function). If it receives the first information requesting the establishment of the first PDU session and the identifier of the service group associated with the first PDU session, where the service group identifier has been saved or registered (or the associated first PDU session has been established under the group identifier), and the PDU session number threshold has been reached but the configured maximum PDU session number is not exceeded, the first network function accepts the first PDU session establishment request.

In some embodiments, allowing the establishment of the first PDU session in the network slice includes: accepting the PDU session establishment request, adding the first PDU session to the registered list, and increasing the first number of the established second PDU sessions of the slice.

In some embodiments, if the first number is less than or equal to the first threshold, allowing the establishment of the first PDU session in the network slice includes: if the service group to which the first PDU session belongs has been registered in the first network function, and the first number is less than or equal to the first threshold, allowing the first PDU session to be registered into the service group associated with the first PDU session in the network slice.

In some embodiments, if the first number is greater than the PDU session quantity threshold and less than or equal to the maximum PDU session quantity, the first network function does not allow the registration of the service group associated with the first PDU session in the first network function.

With reference to some embodiments of the first aspect, in some embodiments, the method further includes at least one of the following:
removing the number corresponding to the first PDU session(s) from the first number;
deregistering the first PDU session from the service group associated with the first PDU session in the network slice.

The first information further indicates the release of the first PDU session from the network slice.

In some embodiments, the first network function deletes the identifier of the service group with no PDU session registered from the first network function.

In some embodiments, the first information indicates the release of the first PDU session(s) from the network slice. The first network function searches for the identifier(s) corresponding to the first PDU session(s), decreases the number of registered first PDU sessions of the slice, and removes the identifier(s) of the first PDU session(s). If the first PDU session is the last PDU session of the service group, the first network function deletes the identifier of the service group from the list after deducting the number corresponding to the first PDU session from the network slice.

In step S2104, the first network function sends fifth information.

In some embodiments, the first network function sends the fifth information to the third network function.

In some embodiments, the fifth information is used to indicate at least one of the following:
the fifth information is used to indicate at least one of the following:
a result of the admission control performed for the network slice;
a reason for failing to be established to the network slice;
whether a maximum number of established second PDU sessions in the network slice is reached; and
whether a maximum number of registered service groups in the network slice is reached.

In some embodiments, the fifth information is carried in the Nnsacf_NSAC_NumOfPDUsUpdate_Response message.

In some embodiments, the result of the admission control operation for the network slice includes at least one of the following:
the identifier of the network slice that allows the establishment of the first PDU session; and
the identifier of the network slice that rejects the establishment of the first PDU session.

In some embodiments, the reason for the failure to register to the network slice includes: the first number being less than or equal to the first threshold.

In some embodiments, the fifth information indicates the timer and/or access type for the terminal to re-initiate the registration request.

In some embodiments, if the first network function returns that the number of PDU sessions created for the network slice has reached the maximum allowable number, the third network function may reject the PDU session establishment request, with the rejection reason set as "the number of sessions allowed by the network slice has been reached". Optionally, a fallback timer and an access type may be set at the same time.

In some embodiments, for a multi-access session, the first network function may receive the multi-access session and provide a result indication of reached or not reached along with the corresponding access type. When the third network function rejects the multi-access session, it may set the access type in the following manner: if the terminal uses dual access, the access type is indicated as dual access if the dual access fails as indicated by the first network function; if the indication shows that one of the access modes fails, the access type is indicated as the access being received; if the terminal requests single access, the access type is indicated as the access being received.

In some embodiments, if the terminal receives a fallback timer, it may not request the creation of user plane resources under the restricted access type before the timer expires. The terminal may request the creation of a first PDU for a PDU session for an unrestricted access type.

In some embodiments, if the PDU session establishment ultimately fails in subsequent procedures, the SMF may trigger another interaction with the NSACF to deduct the corresponding number of PDU sessions and update the response information.

In some embodiments, the term "information" may be used interchangeably with terms such as "message", "signal", "signaling", "report", "configuration", "indication", "instruction", "command", "channel", "parameter", "field", and "data".

In some embodiments, the term "sending" may be used interchangeably with terms such as "transmitting", "reporting" and "transferring".

The information transmission method involved in the embodiments of the present disclosure may include at least one of steps S2101 to S2104. For example, step S2101 may be implemented as a separate embodiment, step S2103 may be implemented as a separate embodiment, and step S2104 may be implemented as a separate embodiment.

For example, step S2102 combined with step S2103 may be implemented as a separate embodiment. Steps S2101 to S2103 may be implemented in combination as a separate embodiment. Steps S2101 to S2104 may be implemented as a separate embodiment, and step S2101 may be implemented as a separate embodiment, but is not limited thereto.

In some embodiments, steps S2101 and S2104 are optional, and one or more of these steps may be omitted or substituted in different embodiments.

FIG. 2b is an interaction diagram of an information transmission method according to an embodiment of the present disclosure. As shown in FIG. 2b, the embodiment of the present disclosure relates to an information transmission method, which is applied to a communication system 100 and the method includes the following.

In step S2201, the third network function determines a service group.

In some embodiments, the third network function may include: a session management function (SMF) in the core network.

In some embodiments, a service group may include an application group corresponding to a service.

In some embodiments, the service group may include: an XR service group.

In some embodiments, the third network function determining the service group includes the third network function determining the identifier of the service group.

In some embodiments, the identifier of the service group includes at least one of the following: an internal group identifier, a standardized general group identifier.

In some embodiments, the first PDU sessions in the service group may be associated with the same service.

For example, the first PDU sessions in the service group may be associated with the same XR service.

In some embodiments, the identifier of the service group may indicate the XR service group or application group to which the first PDU session(s) belong.

In some embodiments, the third network function determines the service group to which the first PDU session(s) belong based on one of the following:
a local configuration of the third network function;
an operation administration and maintenance (OAM) configuration of the third network function;
a unified data management (UDM) subscription information of the terminal(s) associated with the first PDU session(s);
service capabilities of the terminal(s) associated with the first PDU session(s); and
service group information corresponding to the permanent equipment identifier (PEI) of the terminal(s) associated with the first PDU session(s). In some embodiments, step S2101 is omitted. The terminal may send its own service group identifier to the third network function to indicate the service group, or the aforementioned function is set as default.

In step S2202, the third network function sends the first information.

In some embodiments, the third network function sends the first information to the first network function.

In some embodiments, the first network function is configured to perform admission control on the network slice within the service area associated with the first network function.

The second network function is configured to perform admission control on the network slice within the service area associated with the second network function, where the service area associated with the second network function includes the service area associated with the first network function.

The third network function is configured to send the first information to the first network function based on an operation request from the terminal, where the operation request may include a request for establishing the first PDU session, a request for releasing the first PDU session, and so on.

In some embodiments, admission control includes network slice admission control (NSAC).

In some embodiments, the first network function includes a local network slice admission control function (NSACF) in the core network.

In some embodiments, the second network function includes the primary network slice admission control function (NSACF) in the core network.

In some embodiments, the first information includes but is not limited to at least one of the following: a first PDU session establishment request, a first PDU session release request, and an update request for the number of established second PDU sessions.

In some embodiments, the first network function is configured to perform admission control on the first PDU session(s) within the service area corresponding to the first network function.

In some embodiments, the first network function corresponds to at least one service area.

In some embodiments, the second network function is configured to perform global management of one or more first network functions.

In some embodiments, the service area associated with the second network function includes the service area associated with the first network function.

In some embodiments, the first information is used to instruct the first network function to perform network slice admission control operations for the first PDU session(s).

In some embodiments, the first information may indicate, via S-NSSAI, the network slice for which the admission operation is to be performed.

In some embodiments, the first information is triggered by the PDU session establishment procedure and/or PDU session release procedure for a network slice initiated by the terminal.

In some embodiments, the first information carries the content included in the establishment request information sent by the terminal, such as the terminal identifier.

In some embodiments, the terminal may initiate a PDU session establishment procedure for one or more network slices.

In some embodiments, the first information may instruct the first network function to perform at least one network slice admission control operation for the first PDU session(s).

In some embodiments, the first information is used to instruct the first network function to perform service group-based admission control for the first PDU session(s).

In some embodiments, when the SMF does not send the identifier of the service group associated with the first PDU session(s) or the service group itself, the local NSACF may determine the identifier of the group or the service group associated with the PDU session according to the local configuration, OAM configuration, group identifier sent by the PCF, or identifier sent by the NEF.

In some embodiments, service group-based admission control includes but is not limited to at least one of the following:

the first network function establishing the first PDU session(s) into the service group associated with the first PDU session(s) in the network slice;
the first network function establishing the service group associated with the first PDU session(s) in the network slice, and establishing the first PDU session(s) into the service group associated with the first PDU session(s) in the network slice.

In some embodiments, if the SMF determines the peer NSACF, the SMF performs NSACF discovery and selection.

In some embodiments, the first information is further used to indicate at least one of the following:
the first network function releasing the first PDU session(s) from the network slice;
an identifier of the service group associated with the first PDU;
an identifier(s) of the first PDU session(s);
an authorized access type of the network slice;
an identifier of the network slice;
an identifier of the third network function;
an admission control instruction for indicating to establish the first PDU session(s) in the network slice;
an admission control instruction for indicating to release the first PDU session(s) from the network slice;
service area information of the network slice; and
valid time information of the network slice.

In some embodiments, the first information may be used to instruct the local NSACF to update the number of registered second PDU sessions.

In some embodiments, the first information may be triggered by the terminal, and the terminal may trigger the establishment of a PDU session and/or the release of the first PDU session.

In some embodiments, the terminal may send a PDU session establishment request to the SMF via the AMF, triggering the SMF to send the first information to the local NSACF to request the establishment of the PDU session in the network slice.

In some embodiments, the terminal may send a PDU session release request to the SMF via the AMF, triggering the SMF to send the first information to the local NSACF to request the release of the first PDU session in the network slice.

In some embodiments, the admission control triggers the first network function to update the number of established second PDU sessions in the network slice.

In some embodiments, the update of the number of PDU sessions includes at least one of the following: an increase in the number of established second PDU sessions in the network slice, and a decrease in the number of established second PDU sessions in the network slice.

In some embodiments, the admission control instruction may indicate the establishment of a PDU session in the network slice, i.e., indicating an increase in the number of PDU sessions in the network slice.

In some embodiments, the admission control instruction may indicate the release of a PDU session in the network slice, i.e., indicating a decrease in the number of PDU sessions in the network slice.

In some embodiments, the first information is carried in the nsacf_nsac_numofpdusupdate_request message and sent to the first network function.

In step S2203, the first network function performs network slice admission control for the first PDU session.

In some embodiments, the first network function performs network slice admission control for the first PDU session based on the comparison result between the first number of the established second PDU sessions in the network slice and the first threshold.

In some embodiments, when the first information indicates that the PDU session is to be established in the network slice, the first network function performs network slice admission control operations for the terminal based on the comparison result between the first number of the established second PDU sessions in the first network function and the first threshold.

In some embodiments, the first number of the established second PDU sessions in the first network function refers to the first number of the established second PDU sessions of the network slice in the first network function.

The first number is the number of established second PDU sessions in the first network function for the network slice, and the first threshold is at least one of the following: the PDU session quota number of the network slice in the first network function, the PDU session number threshold of the network slice in the first network function, and the maximum PDU session number of the network slice in the first network function.

In some embodiments, the PDU session quota number may be the allowable number of PDU sessions configured by the second network function for the first network function for the network slice.

In some embodiments, the PDU session number threshold may also be the allowable number of PDU sessions configured by the second network function for the first network function for the network slice.

In some embodiments, the PDU session number threshold is less than the PDU session quota number.

In some embodiments, the maximum PDU session number may refer to the maximum number of PDU sessions that the first network function can register for the network slice.

In some embodiments, the second network function is configured with the PDU session quota number of the network slice in the first network function, and the PDU session quota number is the maximum PDU session number of the network slice in the first network function.

In some embodiments, the first number is associated with the service area of the network slice;
the first threshold is associated with the service area of the network slice. One network slice may correspond to one or more service areas.

In some embodiments, a first threshold corresponding to a service area is configured for different service areas.

In some embodiments, if the first network function is configured with a first threshold corresponding to a service area, it may determine whether to allow the establishment of the first PDU session based on the comparison result between the first number of the established second PDU sessions in the service area and the first threshold corresponding to the service area.

In some embodiments, if the first number is less than or equal to the first threshold, the first PDU session is established in the network slice.

In some embodiments, the first number being less than or equal to the first threshold includes at least one of the following:
the first number being less than or equal to the PDU session quota number;
the first number being less than or equal to the PDU session number threshold;
the first number being less than or equal to the maximum PDU session number;
the first number being greater than or equal to the PDU session number threshold and less than or equal to the maximum PDU session number;
the first number being greater than or equal to the PDU session number threshold and less than or equal to the PDU session quota number.

In some embodiments, establishing the first PDU session in the network slice includes: creating the first PDU session into the service group corresponding to the first PDU session in the network slice.

In some embodiments, if it is determined that the first PDU session is to be established in the network slice, and the first network function is configured with a second threshold, then the first network function determines whether to register the service group associated with the first PDU session in the network slice based on the comparison result between the second number of the service groups registered for the network slice in the first network function and the second threshold.

In some embodiments, the method further includes:
if the service group associated with the first PDU session has been registered for the network slice in the first network function, establishing the first PDU session in the service group associated with the first PDU session; or
if the service group associated with the first PDU session has not been registered for the network slice in the first network function, and the second number of the service groups already registered for the network slice in the first network function is less than or equal to the second threshold, registering the service group associated with the first PDU session in the first network function.

In some embodiments, after registering the service group associated with the first PDU session in the first network function, the first network function creates the first PDU session into the service group.

In some embodiments, the second threshold includes one of the following:
the service group number threshold for the network slice configured by the second network function for the first network function;
the service group quota number for the network slice configured by the second network function for the first network function.

In some embodiments, if the establishment of the first PDU session is permitted and the identifier of the service group indicated by the first information already exists in the registered list of the first network function, a new entry for the first PDU session is added under the service group identifier, and the number of registered service groups remains unchanged.

In some embodiments, if the establishment of the first PDU session is permitted and the identifier of the service group indicated by the first information does not exist in the registered list of the first network function, the identifier of the service group is added to the registered list, the number of registered service groups is increased, and a new entry for the first PDU session is added under the identifier of the service group.

In some embodiments, if it is determined that the first PDU session is to be established in the network slice and the first network function is not configured with a second threshold, the first network function performs at least one of the following operations:
if the service group associated with the first PDU session has been registered for the network slice in the first network function, registering the first PDU session into the service group associated with the terminal for the network slice in the first network function;
if the service group associated with the first PDU session has not been registered for the network slice in the first network function, registering the service group associated with the first PDU session in the first network function.

For example, the first network function is configured with a PDU session number threshold and a maximum PDU session number of the network slice locally (i.e., in the first network function). If it receives the first information requesting the establishment of the first PDU session and the identifier of the service group associated with the first PDU session, where the service group identifier has been saved or registered (or the associated first PDU session has been established under the group identifier), and the PDU session number threshold has been reached but the configured maximum PDU session number is not exceeded, the first network function accepts the first PDU session establishment request.

In some embodiments, allowing the establishment of the first PDU session in the network slice includes: accepting the PDU session establishment request, adding the first PDU session to the registered list, and increasing the first number of the established second PDU sessions of the slice.

In some embodiments, if the first number is less than or equal to the first threshold, allowing the establishment of the first PDU session in the network slice includes: if the service group to which the first PDU session belongs has been registered in the first network function, and the first number is less than or equal to the first threshold, allowing the first PDU session to be registered into the service group associated with the first PDU session in the network slice.

In some embodiments, if the first number is greater than the PDU session quantity threshold and less than or equal to the maximum PDU session quantity, the first network function does not allow the registration of the service group associated with the first PDU session in the first network function.

With reference to some embodiments of the first aspect, in some embodiments, the method further includes at least one of the following:
removing the number corresponding to the first PDU session(s) from the first number;
deregistering the first PDU session from the service group associated with the first PDU session in the network slice.

The first information further indicates the release of the first PDU session from the network slice.

In some embodiments, the first network function removes the identifier of the service group with no PDU session registered from the first network function.

In some embodiments, the first information indicates the release of the first PDU session(s) from the network slice. The first network function searches for the identifier(s) corresponding to the first PDU session(s), decreases the number of registered first PDU sessions of the slice, and removes the identifier(s) of the first PDU session(s). If the first PDU session is the last PDU session of the service group, the first network function deletes the identifier of the service group from the list after deducting the number corresponding to the first PDU session from the network slice.

In step S2204, the first network function sends second information to the second network function.

In some embodiments, if the first number is greater than the first threshold, the first network function sends the second information to the second network function.

In some embodiments, the second information is used to instruct the second network function to perform admission control associated with the network slice for the first PDU session.

In some embodiments, the first number being greater than the first threshold includes at least one of the following:
the first number being greater than the PDU session quota number;
the first number being greater than the PDU session number threshold;
the first number being greater than the maximum PDU session number.

In some embodiments, the admission control operation associated with the network slice performed by the second network function for the first PDU session includes one of the following:
the second network function updating the first number threshold;
the second network function performing admission control for the first PDU session based on its own NSAC policy.

In some embodiments, the second information may carry the content indicated by the first information.

With reference to some embodiments of the first aspect, in some embodiments, the second information is also used to indicate at least one of the following:
an identifier of the service group associated with the first PDU;
an identifier(s) of the first PDU session(s);
an authorized access type of the network slice;
an identifier of the network slice;
an identifier of the third network function;
an admission control instruction for indicating to establish the first PDU session(s) in the network slice;
an admission control instruction for indicating to release the first PDU session(s) from the network slice;
service area information of the network slice; and
valid time information of the network slice.

For example, the first network function is configured with the PDU session number threshold and the maximum PDU session number of the network slice locally (i.e., in the first network function). If it receives the first information requesting the establishment of the first PDU session and the identifier of the service group associated with the first PDU session, where the service group identifier has been saved or registered (or the associated terminal has been registered and accepted under the group identifier), and the PDU session number threshold has been reached and the configured maximum PDU session number has also been reached, the local NSACF sends a request to the second network function to perform admission control.

In some embodiments, the second information may be carried in the Nnsacf_NSAC_NumOfPDUsUpdate_Request message and sent by the first network function to the second network function.

In step S2205, the second network function determines the updated first threshold.

In some embodiments, the updated first threshold determined by the second network function may be determined by one of the following:
the first network function; the second network function; and the communication protocol.

In some embodiments, updating the first threshold includes updating at least one of the following:
the PDU session quota number corresponding to the service area in the network slice in the first network function;
the PDU session number threshold corresponding to the service area in the network slice in the first network function;
the maximum PDU session number corresponding to the service area in the network slice in the first network function and the PDU session quota number corresponding to the network slice in the first network function;
the PDU session number threshold corresponding to the network slice in the first network function;
the maximum PDU session number corresponding to the network slice in the first network function.

In some embodiments, the second network function may adjust the first threshold of at least one first network function under its jurisdiction.

In some embodiments, the second network function may update the first threshold of the first network function based on at least one of the following:
the maximum number of global PDU sessions allowed to be established by the second network function; and
the load of the first network function.

In step S2206, the second network function sends the third information.

In some embodiments, the second network function sends third information to the first network function.

In some embodiments, the third information is used to indicate the updated first threshold.

In some embodiments, the third information is sent by the second network function in response to the second information.

For example, the first network function is configured with the PDU session number threshold and the maximum PDU session number of the network slice locally (i.e., in the first network function). If it receives the first information requesting the establishment of the first PDU session and the identifier of the service group associated with the first PDU session, where the service group identifier has been saved or registered (or the associated terminal has been registered and accepted under the group identifier), and the PDU session number threshold has been reached and the configured maximum PDU session number has also been reached, the local NSACF sends a request to the second network function to perform admission control. The primary NSACF carries the updated quota in the response message and sends it to the local NSACF, for the local NSACF to perform NSAC for the first PDU session associated with the group identifier.

In some embodiments, the third information is carried in the Nnsacf_NSAC_NumOfPDUsUpdate_Response message.

In step S2207, the first network function performs network slice admission control for the first PDU session.

In some embodiments, the first network function performs network slice admission control for the first PDU session based on the comparison result between the first number and the third threshold, where the third threshold is the updated value of the first threshold.

In some embodiments, the first network function determines whether to allow the establishment of the first PDU session in the network slice based on the comparison result between the first number and the updated first threshold. This method is similar to that in step S2103, where the first network function determines whether to allow the establishment of the first PDU session in the network slice based on the comparison result between the first number and the first threshold, and thus is not repeated herein.

In some embodiments, if the first number is greater than the updated first threshold based on the comparison result, the first network function rejects the establishment of the first PDU session in the network slice.

In some embodiments, the first network function rejecting the establishment of the first PDU session in the network slice includes: the first network function rejecting the request from the third network function for establishing the first PDU session in the network slice.

In some embodiments, the first network function rejecting the establishment of the first PDU session in the network slice includes: the first network function rejecting the PDU session establishment request sent by the third network function.

In step S2208, the first network function sends the fifth message.

In some embodiments, the first network function sends the fifth information to the third network function.

In some embodiments, the fifth information is used to indicate at least one of the following:
the fifth information is used to indicate at least one of the following:
a result of the admission control performed for the network slice;
a reason for failing to be established to the network slice;
whether a maximum number of established second PDU sessions in the network slice is reached; and
whether a maximum number of registered service groups in the network slice is reached.

In some embodiments, the fifth information is carried in the Nnsacf_NSAC_NumOfPDUsUpdate_Response message.

In some embodiments, the result of the admission control operation for the network slice includes at least one of the following:
the identifier of the network slice that allows the establishment of the first PDU session; and
the identifier of the network slice that rejects the establishment of the first PDU session.

In some embodiments, the reason for the failure to register to the network slice includes: the first number being less than or equal to the first threshold.

In some embodiments, the fifth information indicates the timer and/or access type for the terminal to re-initiate the registration request.

In some embodiments, if the first network function returns that the number of PDU sessions created for the network slice has reached the maximum allowable number, the third network function may reject the PDU session establishment request, with the rejection reason set as "the number of sessions allowed by the network slice has been reached". Optionally, a fallback timer and an access type may be set at the same time.

In some embodiments, for a multi-access session, the first network function may receive the multi-access session and provide a result indication of reached or not reached along with the corresponding access type. When the third network function rejects the multi-access session, it may set the access type in the following manner: if the terminal uses dual access, the access type is indicated as dual access if the dual access fails as indicated by the first network function; if the indication shows that one of the access modes fails, the access type is indicated as the access being received; if the terminal requests single access, the access type is indicated as the access being received.

In some embodiments, if the terminal receives a fallback timer, it may not request the creation of user plane resources under the restricted access type before the timer expires. The terminal may request the creation of a first PDU for a first PDU session for an unrestricted access type.

In some embodiments, if the first PDU session establishment ultimately fails in subsequent procedures, the SMF may trigger another interaction with the NSACF to deduct the corresponding number of PDU sessions and update the response information.

In some embodiments, the term "information" may be used interchangeably with terms such as "message", "signal", "signaling", "report", "configuration", "indication", "instruction", "command", "channel", "parameter", "field", and "data".

In some embodiments, the term "sending" may be used interchangeably with terms such as "transmitting", "reporting" and "transferring".

The information transmission method involved in the embodiments of the present disclosure may include at least one of steps S2201 to S2206. For example, step S2201 may be implemented as a separate embodiment, step S2203 may be implemented as a separate embodiment, step S2204 may be implemented as a separate embodiment, step S2205 may be implemented as a separate embodiment, step S2206 may be implemented as a separate embodiment, step S2207 may be implemented as a separate embodiment, and step S2208 may be implemented as a separate embodiment.

For example, steps S2201 to S2208 may be implemented in combination as a separate embodiment. Steps S2202 to S2208 may be implemented in combination as a separate embodiment. Steps S2204 to S2206 may be implemented as a separate embodiment, but it is not limited thereto.

In some embodiments, steps S2201 and S2208 are optional, and one or more of these steps may be omitted or substituted in different embodiments.

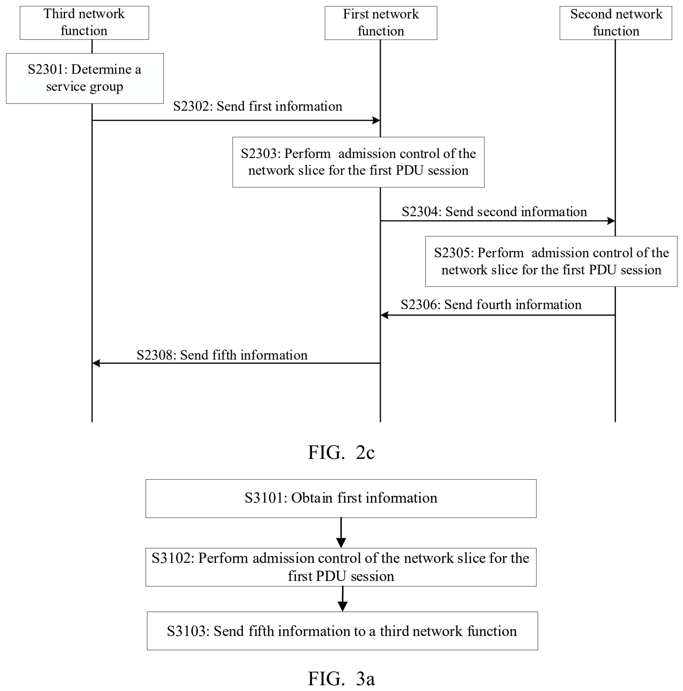

FIG. 2c is an interaction diagram of an information transmission method according to an embodiment of the present disclosure. As shown in FIG. 2c, the embodiment of the present disclosure relates to an information transmission method, which is applied to a communication system 100 and the method includes the following.

In step S2301, the third network function determines a service group.

In some embodiments, the third network function may include: a session management function (SMF) in the core network.

In some embodiments, a service group may include an application group corresponding to a service.

In some embodiments, the service group may include: an XR service group.

In some embodiments, the third network function determining the service group includes the third network function determining the identifier of the service group.

In some embodiments, the identifier of the service group includes at least one of the following: an internal group identifier, a standardized general group identifier.

In some embodiments, the first PDU sessions in the service group may be associated with the same service.

For example, the first PDU sessions in the service group may be associated with the same XR service.

In some embodiments, the identifier of the service group may indicate the XR service group or application group to which the first PDU session(s) belong.

In some embodiments, the third network function determines the service group to which the first PDU session(s) belong based on one of the following:
a local configuration of the third network function;
an operation administration and maintenance (OAM) configuration of the third network function;
a unified data management (UDM) subscription information of the terminal(s) associated with the first PDU session(s);
service capabilities of the terminal(s) associated with the first PDU session(s); and
service group information corresponding to the permanent equipment identifier (PEI) of the terminal(s) associated with the first PDU session(s).

In some embodiments, step S2101 is omitted. The terminal may send its own service group identifier to the third network function to indicate the service group, or the aforementioned function is set as default.

In step S2302, the third network function sends the first information.

In some embodiments, the third network function sends the first information to the first network function.

In some embodiments, the first network function is configured to perform admission control on the network slice within the service area associated with the first network function.

The second network function is configured to perform admission control on the network slice within the service area associated with the second network function, where the service area associated with the second network function includes the service area associated with the first network function.

The third network function is configured to send the first information to the first network function based on an operation request from the terminal, where the operation request may include a request for establishing the first PDU session, a request for releasing the first PDU session, and so on.

In some embodiments, admission control includes network slice admission control (NSAC).

In some embodiments, the first network function includes a local network slice admission control function (NSACF) in the core network.

In some embodiments, the second network function includes the primary network slice admission control function (NSACF) in the core network.

In some embodiments, the first information includes but is not limited to at least one of the following: a first PDU session establishment request, a first PDU session release request, and an update request for the number of established second PDU sessions.

In some embodiments, the first network function is configured to perform admission control on the first PDU session(s) within the service area corresponding to the first network function.

In some embodiments, the first network function corresponds to at least one service area.

In some embodiments, the second network function is configured to perform global management of one or more first network functions.

In some embodiments, the service area associated with the second network function includes the service area associated with the first network function.

In some embodiments, the first information is used to instruct the first network function to perform network slice admission control operations for the first PDU session(s).

In some embodiments, the first information may indicate, via S-NSSAI, the network slice for which the admission operation is to be performed.

In some embodiments, the first information is triggered by the PDU session establishment procedure and/or PDU session release procedure for a network slice initiated by the terminal.

In some embodiments, the first information carries the content included in the establishment request information sent by the terminal, such as the terminal identifier.

In some embodiments, the terminal may initiate a PDU session establishment procedure for one or more network slices.

In some embodiments, the first information may instruct the first network function to perform at least one network slice admission control operation for the first PDU session(s).

In some embodiments, the first information is used to instruct the first network function to perform service group-based admission control for the first PDU session(s).

In some embodiments, when the SMF does not send the identifier of the service group associated with the first PDU session(s) or the service group itself, the local NSACF may determine the identifier of the group or the service group associated with the PDU session according to the local configuration, OAM configuration, group identifier sent by the PCF, or identifier sent by the NEF.

In some embodiments, service group-based admission control includes but is not limited to at least one of the following:
the first network function establishing the first PDU session(s) into the service group associated with the first PDU session(s) in the network slice;
the first network function establishing the service group associated with the first PDU session(s) in the network slice, and establishing the first PDU session(s) into the service group associated with the first PDU session(s) in the network slice.

In some embodiments, if the SMF determines the peer NSACF, the SMF performs NSACF discovery and selection.

In some embodiments, the first information is further used to indicate at least one of the following:
the first network function releasing the first PDU session(s) from the network slice;
an identifier of the service group associated with the first PDU;
an identifier(s) of the first PDU session(s);
an authorized access type of the network slice;
an identifier of the network slice;
an identifier of the third network function;
an admission control instruction for indicating to establish the first PDU session(s) in the network slice;
an admission control instruction for indicating to release the first PDU session(s) from the network slice;
service area information of the network slice; and
valid time information of the network slice.

In some embodiments, the first information may be used to instruct the local NSACF to update the number of registered second PDU sessions.

In some embodiments, the first information may be triggered by the terminal, and the terminal may trigger the establishment of a PDU session and/or the release of the first PDU session.

In some embodiments, the terminal may send a PDU session establishment request to the SMF via the AMF, triggering the SMF to send the first information to the local NSACF to request the establishment of the PDU session in the network slice.

In some embodiments, the terminal may send a PDU session release request to the SMF via the AMF, triggering the SMF to send the first information to the local NSACF to request the release of the first PDU session in the network slice.

In some embodiments, the admission control triggers the first network function to update the number of established second PDU sessions in the network slice.

In some embodiments, the update of the number of PDU sessions includes at least one of the following: an increase in the number of established second PDU sessions in the network slice, and a decrease in the number of established second PDU sessions in the network slice.

In some embodiments, the admission control instruction may indicate the establishment of a PDU session in the network slice, i.e., indicating an increase in the number of PDU sessions in the network slice.

In some embodiments, the admission control instruction may indicate the release of a PDU session in the network slice, i.e., indicating a decrease in the number of PDU sessions in the network slice.

In some embodiments, the first information is carried in the nsacf_nsac_numofpdusupdate_request message and sent to the first network function.

In step S2303, the first network function performs network slice admission control for the first PDU session.

In some embodiments, the first network function performs network slice admission control for the first PDU session based on the comparison result between the first number of the established second PDU sessions in the network slice and the first threshold.

In some embodiments, when the first information indicates that the PDU session is to be established in the network slice, the first network function performs network slice admission control operations for the terminal based on the comparison result between the first number of the established second PDU sessions in the first network function and the first threshold.

In some embodiments, the first number of the established second PDU sessions in the first network function refers to the first number of the established second PDU sessions of the network slice in the first network function.

The first number is the number of established second PDU sessions in the first network function for the network slice, and the first threshold is at least one of the following: the PDU session quota number of the network slice in the first network function, the PDU session number threshold of the network slice in the first network function, and the maximum PDU session number of the network slice in the first network function.

In some embodiments, the PDU session quota number may be the allowable number of PDU sessions configured by the second network function for the first network function for the network slice.

In some embodiments, the PDU session number threshold may also be the allowable number of PDU sessions configured by the second network function for the first network function for the network slice.

In some embodiments, the PDU session number threshold is less than the PDU session quota number.

In some embodiments, the maximum PDU session number may refer to the maximum number of PDU sessions that the first network function can register for the network slice.

In some embodiments, the second network function is configured with the PDU session quota number of the network slice in the first network function, and the PDU session quota number is the maximum PDU session number of the network slice in the first network function.

In some embodiments, the first number is associated with the service area of the network slice;
the first threshold is associated with the service area of the network slice. One network slice may correspond to one or more service areas.

In some embodiments, a first threshold corresponding to a service area is configured for different service areas.

In some embodiments, if the first network function is configured with a first threshold corresponding to a service area, it may determine whether to allow the establishment of the first PDU session based on the comparison result between the first number of the established second PDU sessions in the service area and the first threshold corresponding to the service area.

In some embodiments, if the first number is less than or equal to the first threshold, the first PDU session is established in the network slice.

In some embodiments, the first number being less than or equal to the first threshold includes at least one of the following:
the first number being less than or equal to the PDU session quota number;
the first number being less than or equal to the PDU session number threshold;
the first number being less than or equal to the maximum PDU session number;
the first number being greater than or equal to the PDU session number threshold and less than or equal to the maximum PDU session number;
the first number being greater than or equal to the PDU session number threshold and less than or equal to the PDU session quota number.

In some embodiments, establishing the first PDU session in the network slice includes: creating the first PDU session into the service group corresponding to the first PDU session in the network slice.

In some embodiments, if it is determined that the first PDU session is to be established in the network slice, and the first network function is configured with a second threshold, then the first network function determines whether to register the service group associated with the first PDU session in the network slice based on the comparison result between the second number of the service groups registered for the network slice in the first network function and the second threshold.

In some embodiments, the method further includes:
if the service group associated with the first PDU session has been registered for the network slice in the first network function, establishing the first PDU session in the service group associated with the first PDU session; or
if the service group associated with the first PDU session has not been registered for the network slice in the first network function, and the second number of the service groups already registered for the network slice in the first network function is less than or equal to the second threshold, registering the service group associated with the first PDU session in the first network function.

In some embodiments, after registering the service group associated with the first PDU session in the first network function, the first network function creates the first PDU session into the service group.

In some embodiments, the second threshold includes one of the following:
the service group number threshold for the network slice configured by the second network function for the first network function;
the service group quota number for the network slice configured by the second network function for the first network function.

In some embodiments, if the establishment of the first PDU session is permitted and the identifier of the service group indicated by the first information already exists in the registered list of the first network function, a new entry for the first PDU session is added under the service group identifier, and the number of registered service groups remains unchanged.

In some embodiments, if the establishment of the first PDU session is permitted and the identifier of the service group indicated by the first information does not exist in the registered list of the first network function, the identifier of the service group is added to the registered list, the number of registered service groups is increased, and a new entry for the first PDU session is added under the identifier of the service group.

In some embodiments, if it is determined that the first PDU session is to be established in the network slice and the first network function is not configured with a second threshold, the first network function performs at least one of the following operations:
if the service group associated with the first PDU session has been registered for the network slice in the first network function, registering the first PDU session into the service group associated with the terminal for the network slice in the first network function;
if the service group associated with the first PDU session has not been registered for the network slice in the first network function, registering the service group associated with the first PDU session in the first network function.

For example, the first network function is configured with a PDU session number threshold and a maximum PDU session number of the network slice locally (i.e., in the first network function). If it receives the first information requesting the establishment of the first PDU session and the identifier of the service group associated with the first PDU session, where the service group identifier has been saved or registered (or the associated first PDU session has been established under the group identifier), and the PDU session number threshold has been reached but the configured maximum PDU session number is not exceeded, the first network function accepts the first PDU session establishment request.

In some embodiments, allowing the establishment of the first PDU session in the network slice includes: accepting the PDU session establishment request, adding the first PDU session to the registered list, and increasing the first number of the established second PDU sessions of the slice.

In some embodiments, if the first number is less than or equal to the first threshold, allowing the establishment of the first PDU session in the network slice includes: if the service group to which the first PDU session belongs has been registered in the first network function, and the first number is less than or equal to the first threshold, allowing the first PDU session to be registered into the service group associated with the first PDU session in the network slice.

In some embodiments, if the first number is greater than the PDU session quantity threshold and less than or equal to the maximum PDU session quantity, the first network function does not allow the registration of the service group associated with the first PDU session in the first network function.

With reference to some embodiments of the first aspect, in some embodiments, the method further includes at least one of the following:
removing the number corresponding to the first PDU session(s) from the first number;
deregistering the first PDU session from the service group associated with the first PDU session in the network slice.

The first information further indicates the release of the first PDU session from the network slice.

In some embodiments, the first network function removes the identifier of the service group with no PDU session registered from the first network function.

In some embodiments, the first information indicates the release of the first PDU session(s) from the network slice. The first network function searches for the identifier(s) corresponding to the first PDU session(s), decreases the number of registered first PDU sessions of the slice, and removes the identifier(s) of the first PDU session(s). If the first PDU session is the last PDU session of the service group, the first network function deletes the identifier of the service group from the list after deducting the number corresponding to the first PDU session from the network slice.

In step S2304, the first network function sends second information to the second network function.

In some embodiments, if the first number is greater than the first threshold, the first network function sends the second information to the second network function.

In some embodiments, the second information is used to instruct the second network function to perform admission control associated with the network slice for the first PDU session.

In some embodiments, the first number being greater than the first threshold includes at least one of the following:
the first number being greater than the PDU session quota number;
the first number being greater than the PDU session number threshold;
the first number being greater than the maximum PDU session number.

In some embodiments, the admission control operation associated with the network slice performed by the second network function for the first PDU session includes one of the following:
the second network function updating the first number threshold;
the second network function performing admission control for the first PDU session based on its own NSAC policy.

In some embodiments, the second information may carry the content indicated by the first information.

With reference to some embodiments of the first aspect, in some embodiments, the second information is also used to indicate at least one of the following:
an identifier of the service group associated with the first PDU;
an identifier(s) of the first PDU session(s);
an authorized access type of the network slice;
an identifier of the network slice;
an identifier of the third network function;
an admission control instruction for indicating to establish the first PDU session(s) in the network slice;
an admission control instruction for indicating to release the first PDU session(s) from the network slice;
service area information of the network slice; and
valid time information of the network slice.

For example, the first network function is configured with the PDU session number threshold and the maximum PDU session number of the network slice locally (i.e., in the first network function). If it receives the first information requesting the establishment of the first PDU session and the identifier of the service group associated with the first PDU session, where the service group identifier has been saved or registered (or the associated terminal has been registered and accepted under the group identifier), and the PDU session number threshold has been reached and the configured maximum PDU session number has also been reached, the local NSACF sends a request to the primary NSACF (second network function) to perform admission control. The primary NSACF locally performs the NSAC for the first PDU session associated with the group identifier (i.e., accepts or rejects the establishment admission request for the first PDU session based on its own NSAC policy).

In some embodiments, the second information may be carried in the Nnsacf_NSAC_NumOfPDUsUpdate_Request message and sent by the first network function to the second network function.

In step S2305, admission control for the network slice for the first PDU session is performed.

In some embodiments, admission control for the network slice is performed for the PDU session based on the comparison result between the third number of established third PDU sessions in the network slice and the fourth threshold.

In some embodiments, the first threshold is less than or equal to the fourth threshold.

In some embodiments, the fourth threshold may include, but is not limited to, one of the following: the global PDU session number threshold configured by the second network function.

In some embodiments, the third number of established third PDU sessions in the second network function refers to the third number of established third PDU sessions in the second network function for the network slice.

In some embodiments, the fact that the second network function performs admission control for the network slice for the terminal based on the comparison result between the third number of established third PDU sessions in the second network function and the fourth threshold may be determined by one of the following: the first network function; the second network function; and the communication protocol.

In some embodiments, the third number refers to the number of established third PDU sessions in the second network function for the network slice, and the fourth threshold is at least one of the following: the PDU session quota number of the network slice in the second network function, the PDU session number threshold of the network slice in the second network function, and the maximum PDU session number of the network slice in the second network function.

In some implementations, the PDU session quota number may be the number of PDU sessions allowed to be established, configured by the second network function for the network slice.

In some implementations, the PDU session number threshold may also be the number of PDU sessions allowed to be established, configured by the second network function for the network slice.

In some implementations, the PDU session number threshold is less than the PDU session quota number.

In some implementations, the maximum PDU session number may be the maximum number of PDU sessions that can be established globally by the second network function.

In some implementations, the PDU session quota number is the maximum PDU session number of the network slice in the second network function.

In some embodiments, the third number and the fourth threshold are associated with the service area of the network slice. One network slice may correspond to one or more service areas.

In some embodiments, a fourth threshold corresponding to the service area is configured for different service areas.

In some embodiments, if the first network function is configured with a fourth threshold corresponding to the service area, it may determine whether to establish a PDU session based on the comparison result between the third number of registered terminals in the service area and the fourth threshold corresponding to the service area.

In some embodiments, if the second network function is not configured with the fifth threshold corresponding to the service group, it may determine whether to permit the establishment of the first PDU based on the comparison result between the number of established third PDUs in the global scope of the second network function and the fourth threshold for the established third PDUs in the global scope of the second network function.

In some embodiments, if the third number is less than or equal to the fourth threshold, the first PDU session is established in the network slice.

In some embodiments, the third number being less than or equal to the fourth threshold includes at least one of the following:
the third number being less than or equal to the PDU session quota number;
the third number being less than or equal to the PDU session number threshold;
the third number being less than or equal to the maximum PDU session number;
the third number being greater than or equal to the PDU session number threshold and less than or equal to the maximum PDU session number;
the third number being greater than or equal to the PDU session number threshold and less than or equal to the PDU session quota number.

In some embodiments, establishing the first PDU session in the network slice includes: creating the first PDU session into the service group corresponding to the first PDU session in the network slice.

In some embodiments, if it is determined that the first PDU session is to be established in the network slice and the second network function is configured with the fifth threshold, the second network function determines whether to register the service group associated with the first PDU session in the network slice based on the comparison result between the fourth number of registered service groups of the network slice in the second network function and the fifth threshold.

In some embodiments, the method further includes:
if the service group associated with the first PDU session has been registered for the network slice in the second network function, establishing the first PDU session in the service group associated with the first PDU session; or
if the service group associated with the first PDU session has not been registered for the network slice in the second network function, and the fourth number of registered service groups of the network slice in the second network function is less than or equal to the fifth threshold, registering the service group associated with the first PDU session at the second network function.

In some embodiments, after the second network function registers the service group associated with the first PDU session, the second network function creates the first PDU session into the service group.

In some embodiments, the fifth threshold includes one of the following:
the service group number threshold configured by the second network function for the network slice;
the service group quota number configured by the second network function for the network slice.

In some embodiments, if the establishment of the first PDU session is allowed and the identifier of the service group indicated by the second information already exists in the registered list of the second network function, a new entry of the first PDU session is added under the identifier of the service group, and the number of registered service groups remains unchanged.

In some embodiments, if the establishment of the first PDU session is allowed and the identifier of the service group indicated by the second information does not exist in the registered list of the second network function, the identifier of the service group is added to the registered list, the number of registered service groups is increased, and a new entry of the first PDU session is added under the identifier of the service group.

In some embodiments, if it is determined that the first PDU session is to be established in the network slice and the second network function is not configured with the fifth threshold, the second network function performs at least one of the following:
if the service group associated with the first PDU session has been registered for the network slice in the second network function, registering the first PDU session into the service group associated with the terminal for the network slice in the second network function;
if the service group associated with the first PDU session has not been registered for the network slice in the second network function, registering the service group associated with the first PDU session at the second network function.

In some embodiments, allowing the establishment of the first PDU session in the network slice includes: accepting the PDU session establishment request, adding the first PDU session to the registered list, and incrementing the third number of established third PDU sessions in the slice.

In some embodiments, if the third number is less than or equal to the fourth threshold, allowing the establishment of the first PDU session in the network slice includes: if the service group to which the first PDU session belongs has been registered in the second network function, and the third number is less than or equal to the fourth threshold, allowing the PDU session to be registered to the service group associated with the PDU session in the network slice.

In some embodiments, if the third number is greater than the PDU session number threshold and the third number is less than or equal to the maximum PDU session number, the second network function does not allow the registration of the service group associated with the PDU session in the second network function.

In one embodiment, if the second network function determines that the third number is greater than the fourth threshold, it does not allow the creation of the PDU session in the network slice.

In some embodiments, the third number being greater than the fourth threshold includes at least one of the following:
the third number being greater than the PDU session quota number;
the third number being greater than the PDU session number threshold;
the third number being greater than the maximum PDU session number.
In step S2306, fourth information is sent to the first network function.

In some embodiments, the fourth information is used to indicate whether the second network function allows the establishment of the first PDU session in the network slice.

In some embodiments, the fourth information is sent by the second network function in response to the second information.

In some embodiments, the fourth information is carried in the Nnscf_NSAC_NumOfUEsUpdate_Response message.

In step S2208, the first network function sends the fifth message.

In some embodiments, the first network function sends the fifth information to the third network function.

In some embodiments, the fifth information is used to indicate at least one of the following:
the fifth information is used to indicate at least one of the following:
a result of the admission control performed for the network slice;
a reason for failing to be established to the network slice;
whether a maximum number of established second PDU sessions in the network slice is reached; and
whether a maximum number of registered service groups in the network slice is reached.

In some embodiments, the fifth information is carried in the Nnsacf_NSAC_NumOfPDUsUpdate_Response message.

In some embodiments, the result of the admission control operation for the network slice includes at least one of the following:
the identifier of the network slice that allows the establishment of the first PDU session; and
the identifier of the network slice that rejects the establishment of the first PDU session.

In some embodiments, the reason for the failure to register to the network slice includes: the first number being less than or equal to the first threshold.

In some embodiments, the fifth information indicates the timer and/or access type for the terminal to re-initiate the registration request.

In some embodiments, if the first network function returns that the number of PDU sessions created for the network slice has reached the maximum allowable number, the third network function may reject the PDU session establishment request, with the rejection reason set as "the number of sessions allowed by the network slice has been reached". Optionally, a fallback timer and an access type may be set at the same time.

In some embodiments, for a multi-access session, the first network function may receive the multi-access session and provide a result indication of reached or not reached along with the corresponding access type. When the third network function rejects the multi-access session, it may set the access type in the following manner: if the terminal uses dual access, the access type is indicated as dual access if the dual access fails as indicated by the first network function; if the indication shows that one of the access modes fails, the access type is indicated as the access being received; if the terminal requests single access, the access type is indicated as the access being received.

In some embodiments, if the terminal receives a fallback timer, it may not request the creation of user plane resources under the restricted access type before the timer expires. The terminal may request the creation of a first PDU for a first PDU session for an unrestricted access type.

In some embodiments, if the first PDU session establishment ultimately fails in subsequent procedures, the SMF may trigger another interaction with the NSACF to deduct the corresponding number of PDU sessions and update the response information.

The information transmission method involved in the embodiments of the present disclosure may include at least one of steps S2301 to S2306. For example, step S2301 may be implemented as a separate embodiment, step S2303 may be implemented as a separate embodiment, step S2304 may be implemented as a separate embodiment, step S2305 may be implemented as a separate embodiment, step S2306 may be implemented as a separate embodiment, and step S2307 may be implemented as a separate embodiment.

For example, steps S2301 to S2307 may be implemented in combination as a separate embodiment. Steps S2302 to S2307 may be implemented in combination as a separate embodiment. Steps S2305 to S2306 may be implemented as a separate embodiment, but it is not limited thereto.

In some embodiments, steps S2301 and S3107 are optional, and one or more of these steps may be omitted or substituted in different embodiments.

FIG. 3a is a schematic flowchart of an information transmission method according to an embodiment of the present disclosure. As shown in FIG. 3a, the information transmission method involved in the embodiment of the present disclosure is executed by a first network function 1031, and the method includes the following steps.

In step S3101, first information is obtained.

In some embodiments, for optional implementation manners of step S3101, reference may be made to the optional implementation manner of step S2102 in FIG. 2a and other relevant parts in the embodiments related to FIG. 2a, which are not repeated herein.

In some embodiments, the first network function receives the first information sent by the third network function, but is not limited thereto; it may also receive first information sent by other entities.

In some embodiments, the first network function obtains the first information specified by the protocol.

In some embodiments, the first network function obtains the first information from the upper layer(s).

In some embodiments, the first network function performs processing to obtain the first information.

In some embodiments, step S3101 is omitted, the first network function autonomously implements the function indicated by the first information, or the aforementioned function is default.

In step S3102, admission control of the network slice is performed for the first PDU session.

In some embodiments, for optional implementation manners of step S3102, reference may be made to the optional implementation manner of step S2103 in FIG. 2a and other relevant parts in the embodiments related to FIG. 2a, which are not repeated herein.

In step S3103, fifth information is sent to the third network function.

In some embodiments, for optional implementation manners of step S3103, reference may be made to the optional implementation manner of step S2104 in FIG. 2a and other relevant parts in the embodiments related to FIG. 2a, which are not repeated herein.

The information transmission method involved in the embodiments of the present disclosure may include at least one of steps S3101 to S3103. For example, step S3101 may be implemented as a separate embodiment, step S3102 may be implemented as a separate embodiment, and step S3103 may be implemented as a separate embodiment.

In some embodiments, steps S3101 and S3103 are optional, and one or more of these steps may be omitted or substituted in different embodiments.

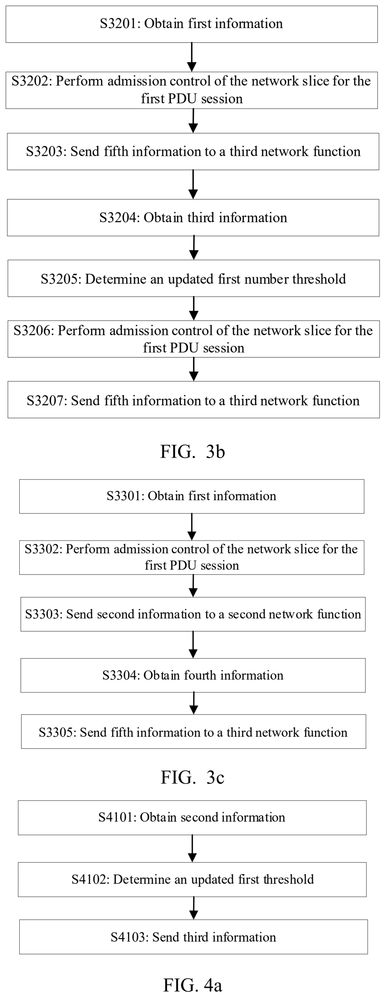

FIG. 3b is a schematic flowchart of an information transmission method according to an embodiment of the present disclosure. As shown in FIG. 3b, the information transmission method involved in the embodiment of the present disclosure is executed by the first network function 1031, and the method includes the following steps.

In step S3201, first information is obtained.

In some embodiments, for optional implementation manners of step S3201, reference may be made to the optional implementation manner of step S2202 in FIG. 2b and other relevant parts in the embodiments related to FIG. 2b, which are not repeated herein.

In some embodiments, the first network function receives the first information sent by the third network function, but is not limited thereto; it may also receive first information sent by other entities.

In some embodiments, the first network function obtains the first information specified by the protocol.

In some embodiments, the first network function obtains the first information from the upper layer(s).

In some embodiments, the first network function performs processing to obtain the first information.

In some embodiments, step S3201 is omitted, the first network function autonomously implements the function indicated by the first information, or the aforementioned function is default.

In step S3202, admission control of the network slice is performed for the first PDU session.

In some embodiments, for optional implementation manners of step S3202, reference may be made to the optional implementation manner of step S2203 in FIG. 2b and other relevant parts in the embodiments related to FIG. 2b, which are not repeated herein.

In step S3203, second information is sent to the second network function.

In some embodiments, for optional implementation manners of step S3203, reference may be made to the optional implementation manner of step S2204 in FIG. 2b and other relevant parts in the embodiments related to FIG. 2b, which are not repeated herein.

In step S3204, third information is obtained.

In some embodiments, for optional implementation manners of step S3204, reference may be made to the optional implementation manner of step S2206 in FIG. 2b and other relevant parts in the embodiments related to FIG.2b, which are not repeated herein.

In some embodiments, the first network function receives third information sent by the second network function, but is not limited thereto; it may also receive third information sent by other entities.

In some embodiments, the first network function obtains the first information specified by the protocol.

In some embodiments, the first network function obtains the third information from the upper layer(s).

In some embodiments, the first network function performs processing to obtain the third information.

In some embodiments, step S3204 is omitted, the first network function autonomously implements the function indicated by the third information, or the aforementioned function is default.

In step S3205, an updated first threshold is determined.

In some embodiments, for optional implementation manners of step S3205, reference may be made to the optional implementation manner of step S2206 in FIG. 2b and other relevant parts in the embodiments related to FIG. 2b, which are not repeated herein.

In step S3206, admission control of the network slice is performed for the first PDU session.

In some embodiments, for optional implementation manners of step S3207, reference may be made to the optional implementation manner of step S2207 in FIG. 2b and other relevant parts in the embodiments related to FIG. 2b, which are not repeated herein.

In step S3207, fifth information is sent to the third network function.

In some embodiments, for optional implementation manners of step S3207, reference may be made to the optional implementation manner of step S2208 in FIG. 2b and other relevant parts in the embodiments related to FIG. 2b, which are not repeated herein.

The information transmission method involved in the embodiments of the present disclosure may include at least one of steps S3201 to S3208. For example, step S3201 may be implemented as a separate embodiment, step S3202 may be implemented as a separate embodiment, step S3203 may be implemented as a separate embodiment, step S3204 may be implemented as a separate embodiment, step S3205 may be implemented as a separate embodiment, step S3206 may be implemented as a separate embodiment, step S3207 may be implemented as a separate embodiment, and step S3208 may be implemented as a separate embodiment.

For example, steps S3201 to S3207 may be implemented as a separate embodiment, but it is not limited thereto.

In some embodiments, step S3207 is optional, and one or more of these steps may be omitted or substituted in different embodiments.

FIG. 3c is a schematic flowchart of an information transmission method according to an embodiment of the present disclosure. As shown in FIG. 3c, the information transmission method involved in the embodiment of the present disclosure is executed by the first network function 1031, and the method includes the following steps.

In step S3301, first information is obtained.

In some embodiments, for optional implementation manners of step S3301, reference may be made to the optional implementation manner of step S2302 in FIG. 2c and other relevant parts in the embodiments related to FIG. 2c, which are not repeated herein.

In some embodiments, the first network function receives the first information sent by the third network function, but is not limited thereto; it may also receive first information sent by other entities.

In some embodiments, the first network function obtains the first information specified by the protocol.

In some embodiments, the first network function obtains the first information from the upper layer(s).

In some embodiments, the first network function performs processing to obtain the first information.

In some embodiments, step S3301 is omitted, the first network function autonomously implements the function indicated by the first information, or the aforementioned function is default.

In step S3302, admission control of the network slice is performed for the first PDU session.

In some embodiments, for optional implementation manners of step S3302, reference may be made to the optional implementation manner of step S2303 in FIG. 2c and other relevant parts in the embodiments related to FIG. 2c, which are not repeated herein.

In step S3303, second information is sent to the second network function.

In some embodiments, for optional implementation manners of step S3303, reference may be made to the optional implementation manner of step S2304 in FIG. 2c and other relevant parts in the embodiments related to FIG. 2c, which are not repeated herein.

In step S3304, fourth information is obtained.

In some embodiments, for optional implementation manners of step S3304, reference may be made to the optional implementation manner of step S2306 in FIG. 2c and other relevant parts in the embodiments related to FIG. 2c, which are not repeated herein.

In step S3305, fifth information is sent to the third network function.

In some embodiments, for optional implementation manners of step S3305, reference may be made to the optional implementation manner of step S2307 in FIG. 2c and other relevant parts in the embodiments related to FIG. 2c, which are not repeated herein.

The information transmission method involved in the embodiments of the present disclosure may include at least one of steps S3301 to S3308. For example, step S3301 may be implemented as a separate embodiment, step S3302 may be implemented as a separate embodiment, step S3303 may be implemented as a separate embodiment, step S3304 may be implemented as a separate embodiment, step S3305 may be implemented as a separate embodiment, step S3306 may be implemented as a separate embodiment, and step S3307 may be implemented as a separate embodiment.

For example, steps S3301 to S3304 may be implemented as a separate embodiment, but it is not limited thereto.

In some embodiments, step S3305 is optional, and one or more of these steps may be omitted or substituted in different embodiments.

FIG. 4a is a schematic flowchart of an information transmission method according to an embodiment of the present disclosure. As shown in Figure 4a, the information transmission method involved in the embodiment of the present disclosure is executed by the first network function 1032, and the method includes the following steps:

In step S4101, second information is obtained.

In some embodiments, for optional implementation manners of step S4101, reference may be made to the optional implementation manner of step S2204 in FIG. 2b and other relevant parts in the embodiments related to FIG. 2b, which are not repeated herein.

In some embodiments, the second network function receives second information sent by the first network function, but is not limited thereto; it may also receive second information sent by other entities.

In some embodiments, the second network function obtains the second information specified by the protocol.

In some embodiments, the second network function obtains the second information from the upper layer(s).

In some embodiments, the second network function performs processing to obtain the second information.

In some embodiments, step S4101 is omitted, the first network function autonomously implements the function indicated by the first information, or the aforementioned function is default.

In step S4102, a first threshold to be updated is determined.

In some embodiments, for optional implementation manners of step S4102, reference may be made to the optional implementation manner of step S2205 in FIG. 2b and other relevant parts in the embodiments related to FIG. 2b, which are not repeated herein.

In step S4103, third information is sent.

In some embodiments, for optional implementation manners of step S4103, reference may be made to the optional implementation manner of step S2206 in FIG. 2b and other relevant parts in the embodiments related to FIG. 2b, which are not repeated herein.

The information transmission method involved in the embodiments of the present disclosure may include at least one of steps S4101 to S4103. For example, step S4101 may be implemented as a separate embodiment, step S4102 may be implemented as a separate embodiment, and step S4103 may be implemented as a separate embodiment.

For example, steps S4102 to S4103 may be implemented as a separate embodiment, but it is not limited thereto.

In some embodiments, step S4101 is optional, and one or more of these steps may be omitted or substituted in different embodiments.

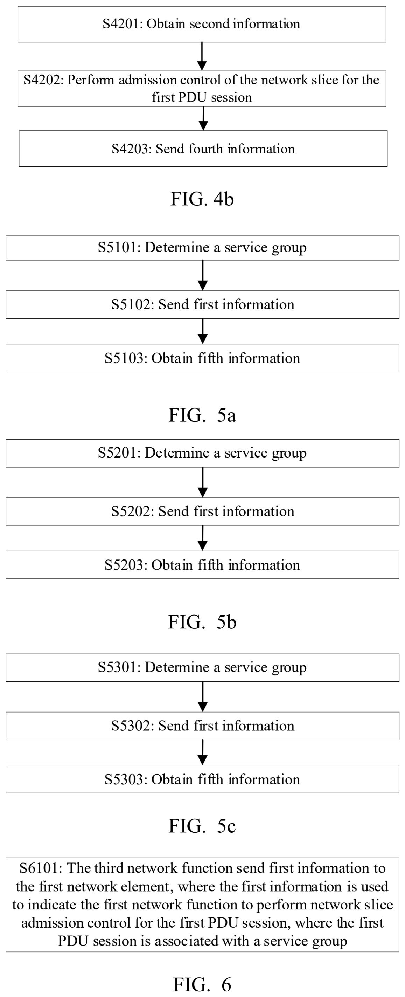

FIG. 4b is a schematic flowchart of an information transmission method according to an embodiment of the present disclosure. As shown in FIG. 4b, the information transmission method involved in the embodiment of the present disclosure is executed by the first network function 1032, and the method includes the following steps:

In step S4201, second information is obtained.

In some embodiments, for optional implementation manners of step S4201, reference may be made to the optional implementation manner of step S2304 in FIG. 2c and other relevant parts in the embodiments related to FIG. 2c, which are not repeated herein.

In some embodiments, the second network function receives second information sent by the first network function, but is not limited thereto; it may also receive second information sent by other entities.

In some embodiments, the second network function obtains the second information specified by the protocol.

In some embodiments, the second network function obtains the second information from the upper layer(s).

In some embodiments, the second network function performs processing to obtain the second information.

In some embodiments, step S4201 is omitted, the first network function autonomously implements the function indicated by the first information, or the aforementioned function is default.

In step S4202, admission control of the network slice is performed for the first PDU session.

In some embodiments, for optional implementation manners of step S4202, reference may be made to the optional implementation manner of step S2305 in FIG. 2c and other relevant parts in the embodiments related to FIG. 2c, which are not repeated herein.

In step S4203, fourth information is sent.

In some embodiments, for optional implementation manners of step S4203, reference may be made to the optional implementation manner of step S2306 in FIG. 2c and other relevant parts in the embodiments related to FIG. 2c, which are not repeated herein.

The information transmission method involved in the embodiments of the present disclosure may include at least one of steps S4201 to S4203. For example, step S4201 may be implemented as a separate embodiment, step S4202 may be implemented as a separate embodiment, and step S4203 may be implemented as a separate embodiment.

For example, steps S4202 to S4203 may be implemented as a separate embodiment, but it is not limited thereto.

In some embodiments, step S4201 is optional, and one or more of these steps may be omitted or substituted in different embodiments.

FIG. 5a is an interaction schematic diagram of an information transmission method according to an embodiment of the present disclosure. As shown in Figure 5a, the information transmission method involved in the embodiment of the present disclosure is configured to be executed by the third network function 103, and the method includes one of the following steps.

In step S5101, a service group is determined.

In some embodiments, for optional implementation manners of step S5101, reference may be made to the optional implementation manner of step S2101 in FIG. 2a and other relevant parts in the embodiments related to FIG. 2a, which are not repeated herein.

In some embodiments, step S5101 is omitted. The third network function receives the service group identifier from the terminal.

In step S5102, first information is sent.

In some embodiments, for optional implementation manners of step S5102, reference may be made to the optional implementation manner of step S2102 in FIG. 2a and other relevant parts in the embodiments related to FIG. 2a, which are not repeated herein.

In step S5103, fifth information is obtained.

In some embodiments, for optional implementation manners of step S5103, reference may be made to the optional implementation manner of step S2104 in FIG. 2a and other relevant parts in the embodiments related to FIG. 2a, which are not repeated herein.

In some embodiments, the third network function receives the fifth information sent by the first network function, but is not limited thereto; it may also receive the fifth information sent by other entities.

In some embodiments, the third network function obtains the fifth information specified by the protocol.

In some embodiments, the third network function obtains the fifth information from the upper layer(s).

In some embodiments, the third network function performs processing to obtain the fifth information.

In some embodiments, step S5103 is omitted, and the third network function autonomously implements the function indicated by the first information, or the aforementioned function is default.

The information transmission method involved in the embodiments of the present disclosure may include at least one of steps S5101 to S5103. For example, step S5101 may be implemented as a separate embodiment, step S5102 may be implemented as a separate embodiment, and step S5103 may be implemented as a separate embodiment.

For example, steps S5102 to S5103 may be implemented as a separate embodiment, but it is not limited thereto.

In some embodiments, step S5101 is optional, and one or more of these steps may be omitted or substituted in different embodiments.

FIG. 5b is an interaction schematic diagram of an information transmission method according to an embodiment of the present disclosure. As shown in FIG. 5b, the information transmission method involved in the embodiment of the present disclosure is executed by the third network function 103, and the method includes one of the following steps.

In step S5201, a service group is determined.

In some embodiments, for optional implementation manners of step S2101, reference may be made to the optional implementation manner of step S2201 in FIG. 2b and other relevant parts in the embodiments related to FIG. 2b, which are not repeated herein.

In some embodiments, step S5201 is omitted. The third network function receives the service group identifier from the terminal.

In step S5202, first information is sent.

In some embodiments, for optional implementation manners of step S5202, reference may be made to the optional implementation manner of step S2202 in FIG. 2b and other relevant parts in the embodiments related to FIG. 2b, which are not repeated herein.

In step S5203, fifth information is obtained.

In some embodiments, for optional implementation manners of step S5203, reference may be made to the optional implementation manner of step S2208 in FIG. 2b and other relevant parts in the embodiments related to FIG. 2b, which are not repeated herein.

In some embodiments, the third network function receives the fifth information sent by the first network function, but is not limited thereto; it may also receive the fifth information sent by other entities.

In some embodiments, the third network function obtains the fifth information specified by the protocol.

In some embodiments, the third network function obtains the fifth information from the upper layer(s).

In some embodiments, the third network function performs processing to obtain the fifth information.

In some embodiments, step S5203 is omitted, and the third network function autonomously implements the function indicated by the first information, or the aforementioned function is default.

The information transmission method involved in the embodiments of the present disclosure may include at least one of steps S5201 to S5203. For example, step S5201 may be implemented as a separate embodiment, step S5202 may be implemented as a separate embodiment, and step S5203 may be implemented as a separate embodiment.

For example, steps S5202 to S5203 may be implemented as a separate embodiment, but it is not limited thereto.

In some embodiments, step S5201 is optional, and one or more of these steps may be omitted or substituted in different embodiments.

FIG. 5c is an interaction schematic diagram of an information transmission method according to an embodiment of the present disclosure. As shown in FIG. 5c, the information transmission method involved in the embodiment of the present disclosure is executed by the third network function 103, and the method includes one of the following steps.

In step S5301, a service group is determined.

In some embodiments, for optional implementation manners of step S5301, reference may be made to the optional implementation manner of step S2301 in FIG. 2c and other relevant parts in the embodiments related to FIG. 2c, which are not repeated herein.

In some embodiments, step S5301 is omitted. The third network function receives the service group identifier from the terminal.

In step S5302, first information is sent.

In some embodiments, for optional implementation manners of step S5302, reference may be made to the optional implementation manner of step S2302 in FIG. 2c and other relevant parts in the embodiments related to FIG. 2c, which are not repeated herein.

In step S5303, fifth information is obtained.

In some embodiments, for optional implementation manners of step S5303, reference may be made to the optional implementation manner of step S2307 in FIG. 2c and other relevant parts in the embodiments related to FIG. 2c, which are not repeated herein.

In some embodiments, the third network function receives the fifth information sent by the first network function, but is not limited thereto; it may also receive the fifth information sent by other entities.

In some embodiments, the third network function obtains the fifth information specified by the protocol.

In some embodiments, the third network function obtains the fifth information from the upper layer(s).

In some embodiments, the third network function performs processing to obtain the fifth information.

In some embodiments, step S5303 is omitted, and the third network function autonomously implements the function indicated by the first information, or the aforementioned function is default.

The information transmission method involved in the embodiments of the present disclosure may include at least one of steps S5301 to S5303. For example, step S5301 may be implemented as a separate embodiment, step S5302 may be implemented as a separate embodiment, and step S5303 may be implemented as a separate embodiment.

For example, steps S5302 to S5303 may be implemented as a separate embodiment, but it is not limited thereto.

In some embodiments, step S5301 is optional, and one or more of these steps may be omitted or replaced in different embodiments.

FIG. 6 is an interaction schematic diagram of an information transmission method according to an embodiment of the present disclosure. As shown in FIG. 6, the information transmission method involved in the embodiment of the present disclosure is applicable to a communication system 100, and the method includes one of the following steps.

In step S6101, A third network function sends first information to a first network function, where the first information is used to indicate the first network function to perform admission control of a network slice for a first PDU session, and the first PDU session is associated with a service group.

For optional implementation manners of step S6101, reference may be made to step S2101 in FIG. 2a, step S2201 in FIG. 2b, step S2301 in FIG. 2c, step S3101 in FIG. 3a, step S3201 in FIG. 3b, step S3301 inFIG. 3c, step S5101 in FIG. 5a, step S5201 in FIG. 5b, and step S5301 in FIG. 5c, as well as other relevant parts in the embodiments related to FIGS. 2a to 5c, and details are not repeated herein.

In some embodiments, the aforementioned method may include the methods in the embodiments related to the first network function, the second network function, the third network function, etc., and details are not repeated herein.

Several specific examples are provided below with reference to any of the foregoing embodiments.

In this example, an admission control scheme for XR group-related PDU sessions in a hierarchical NSACF architecture is provided. The process involves an SMF, a local NSACF (the first network function), a primary NSACF (the second network function), and a UE (i.e., a terminal); it focuses on the access admission of home XR group PDU sessions by the local NSACF and the primary NSACF. When the local NSAC conditions are met, the local NSACF performs NSAC for group sessions; otherwise, it requests the primary NSACF to perform NSAC for group sessions.

With regard to the local NSACF, the local NSACF considers the group identifier when performing an update on the number of activated sessions for the slice.

When the local maximum number of PDU sessions is reached, and/or when the local maximum number of XR group PDU sessions is reached, the local NSACF interacts with the primary NSACF to process the NSAC request.

If a group quota is configured locally on the local NSACF, it shall perform a group validity check locally (if the group quota is not reached, the PDU session establishment request associated with the group identifier is accepted; otherwise, the request is rejected or processed in accordance with the non-group PDU session NSAC procedure).

If a group threshold or quota is configured on the local NSACF and the maximum group threshold or quota of the slice is not reached, the following operations shall be performed: (1) If the group identifier is already in the session NSAC list, a new entry is added under this group identifier, and the number of session NSAC groups remains unchanged; (2) If the group identifier is not in the session NSAC list, the group identifier is added to the list, and the number of session NSAC groups is increased. Further, the session establishment request is accepted, the session is added to the established session list, and the number of established sessions of the slice is increased.

If no service group quota is configured on the local NSACF and the hierarchical NSAC architecture adopts the regular quota mode, the validity check for the PDU session shall be performed as follows.

If the request is a session number increase request (session establishment) and the maximum number is already reached, the local NSACF shall send a request to the primary NSACF for NSAC of the PDU session, carrying the XR service ID/group identifier/common ID associated with the PDU session. Correspondingly, the primary NSACF shall carry the updated quota in the response message and send it to the local NSACF, for the local NSACF to perform NSAC for the PDU session associated with the group. Alternatively, the primary NSACF may perform NSAC for the PDU session associated with the group locally (based on the NSAC policy of the primary NSACF, the PDU session establishment admission request is accepted or rejected).

### The primary NSACF:

The primary NSACF returns the increased local maximum number to the local NSACF (delivering a new quota for the local NSACF to perform NSAC of PDU sessions locally), or rejects the request for updating the local maximum number if all the global maximum number has been consumed based on the status of the second PDU sessions established for the network slice.

The primary NSACF checks the global maximum number of PDU sessions and determines whether to accept or reject the request from the local NSACF for updating the local maximum number of PDU sessions, taking into account the group ID/group NSAC (e.g., whether any PDU session of the group is already in the NSAC counting list).

### The SMF:

The SMF sends a PDU session number update request message to the local NSACF, which carries the UE-ID, session ID, slice identifier or identifier list S-NSSAI(s) for which NSAC needs to be performed, access type, and update flag. The SMF further includes a group identifier in the request message to the NSACF, where the group identifier is used to identify the XR service group or application group to which the PDU session belongs. The group identifier may be an internal group identifier, a standardized general group identifier, or an XR application ID or XR service capability indication, etc.

Further, the SMF determines the XR service ID (i.e., group identifier/common ID). The SMF may determine the XR service ID/group identifier/common ID based on local configuration, OAM configuration, or UDM subscription information, XR multimodal service capability/UE PEI-related group information sent by the UE, or UE XR application or XR service capability indication information sent by the RAN/AMF, etc.

### Example 1:

The availability check and update procedure for the number of sessions established on a slice is used to update (i.e., increase or decrease) the number of PDU sessions established within the corresponding area on the slice. This procedure is applicable to group admission control of the hierarchical NSAC architecture for PDU sessions.

The primary NSACF is configured to control and distribute the maximum number of PDU sessions for other NSACFs deployed in different NSAC service areas. This primary NSACF is responsible for the overall NSAC of S-NSSAI on a global scale (the primary NSACF is the NSAC ultimately responsible for S-NSSAI).

An NSACF (i.e., a local NSACF) is responsible for one or more NSAC service areas, and one NSAC service area is associated with only one NSACF instance or one set of NSACFs.

Availability check and update procedure for the number of PDU sessions per network slice based on hierarchical NSAC:

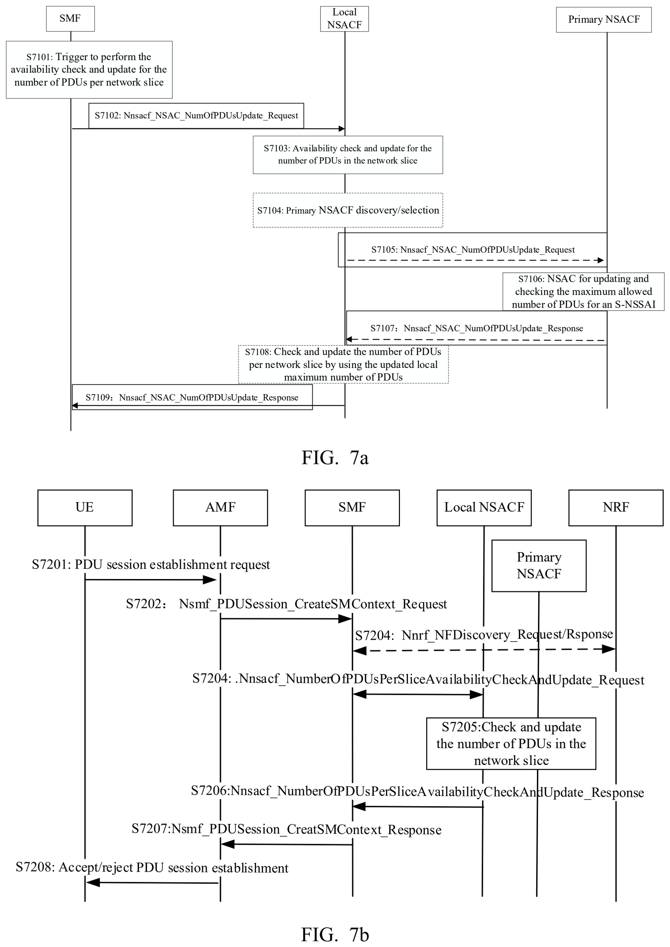

As shown in FIG. 7a, for S-NSSAI sessions requiring calculation of the number of PDUs, if a hierarchical NSACF architecture is deployed in the network, the procedure for enforcing the maximum number of PDU sessions established for an S-NSSAI is as follows.

In steps S7101-S7102, if the SMF does not know the peer NSACF, the SMF first performs NSACF discovery and selection. The SMF (the SMF anchoring the PDU session) triggers the availability check and update procedure for the number of slice sessions. The triggering conditions for this procedure may be that the SMF triggers the procedure for the slice requiring NSAC either at the initial stage of a new PDU session establishment procedure or after a PDU session is successfully released.

The SMF (the SMF anchoring the PDU session) sends a nsacf_nsac_numofPDUsupdate_request message to the NSACF, which carries the UE-ID, session ID, slice identifier or identifier list S-NSSAI(s) for which NSAC needs to be performed, access type, and update flag. The update flag is used to indicate whether the number of sessions is to be increased, decreased, or updated. For example, it is set to increase during a session establishment procedure or when a new access is added for an existing multi-access session; it is set to decrease after a session release procedure or when an access of an existing multi-access session is removed; and it is set to update when indicating an access type update for an existing PDU session. The SMF further includes a group identifier in the request message to the NSACF, where the group identifier is used to identify the XR service group or application group to which the PDU session belongs. The group identifier may be an internal group identifier, a standardized general group identifier, an XR application ID, or an XR service capability indication, etc.

Further, the SMF determines the group identifier. The SMF may determine the group identifier based on local configuration, OAM configuration, UDM subscription information, XR multimodal service capability/UE PEI-related group information sent by the UE, or UE XR application or XR service capability indication information sent by the RAN/AMF, etc.

In step S7103, the local NSACF performs NSAC for the indicated S-NSSAI, taking into account the XR group identifier/XR service ID.

If the PDU session ID entry at the NSACF can be updated-for example, creating a new entry associated with the received NSAC increase request-the same actions as those in Step S7103a shall be performed, and Steps S7104-S7108 shall be skipped.

If the PDU session ID cannot be created at the NSACF (i.e., allowing the PDU session would exceed the local maximum number of PDU sessions), the NSACF shall delegate the request to the primary NSACF to obtain the updated local maximum number of PDU sessions from the primary NSACF.

In some embodiments, when the SMF does not send the identifier/service group of the service group associated with the PDU session, the local NSACF may determine the identifier/service group of the group associated with the PDU session based on local configuration/OAM configuration/group identifier sent by the PCF/identifier sent by the NEF.

In step S7103a, the local NSACF updates the number of PDU sessions currently established on the S-NSSAI. For example, based on the update flag parameter, it performs the corresponding session increment or decrement for the session-anchoring SMF.

If the update flag is set to increment and the maximum number of PDU sessions established on the slice S-NSSAI has already been reached, the NSACF returns a result parameter indicating that the maximum number of PDU sessions for the slice has been reached. If the maximum number of PDU sessions allowed for the slice has not been reached, the NSACF checks the terminal UE ID. If the terminal ID already exists, the NSACF stores the session identifier (ID) and increments the number of sessions for the slice. If the NSACF does not find the terminal UE ID, it saves the UE ID and stores the corresponding session identifier (ID) of the UE at the same time, and increments the number of sessions for the slice.

If the update flag is set to decrement, the NSACF looks up the terminal UE ID, decrements the number of sessions for the slice, and removes the session identifier (ID). If this is the last session of the terminal, the NSACF removes the terminal identifier (UE ID) from the list after deducting the session number from the slice.

If the update flag indicates update, the NSACF looks up the UE ID and session ID, and replaces the access type with a new entry.

For a multi-access session, if the SMF receives multiple access types, it provides multiple access types to the NSACF. When the NSACF receives a request for multiple accesses, it returns an indication for each access type in the result.

With regard to the local NSACF, the local NSACF considers the group identifier when performing an update on the number of activated sessions for the slice.

When the local maximum number of PDU sessions is reached, and/or when the local maximum number of XR group PDU sessions is reached, the local NSACF interacts with the primary NSACF to process the NSAC request.

If a group quota is configured locally on the local NSACF, it shall perform a group validity check locally (if the group quota is not reached, the PDU session establishment request associated with the group identifier is accepted; otherwise, the request is rejected or processed in accordance with the non-group PDU session NSAC procedure).

If the local NSACF is configured with a group threshold or quota and the maximum group threshold or quota of the slice is not reached, the following operations shall be performed: (1) If the group identifier is already in the session NSAC list, a new entry is added under this group identifier without changing the number of session NSAC groups; (2) If the group identifier is not in the session NSAC list, the group identifier is added to the list, and the number of session NSAC groups is increased. Further, the session establishment request is accepted, the session is added to the established session list, and the number of established sessions of the slice is increased.

If no service group quota is configured on the local NSACF and the hierarchical NSAC architecture adopts the regular quota mode, the validity check for the PDU session shall be performed as follows.

If the request is a session number increase request (session establishment) and the maximum number has been reached, the local NSACF shall send a request to the primary NSACF for NSAC of the PDU session, carrying the XR service ID/group identifier/common ID associated with the PDU session. Correspondingly, the primary NSACF shall carry the updated quota in the response message and send it to the local NSACF, for the local NSACF to perform NSAC for the PDU session associated with the group. Alternatively, the primary NSACF may perform NSAC for the PDU session associated with the group locally (based on the NSAC policy of the primary NSACF, the PDU session establishment admission request is accepted or rejected).

If the update flag is set to decrease, the number of PDU sessions of the slice shall be reduced accordingly, and the session ID shall be removed from the group identifier. If the PDU session is the last session in the group, the group identifier shall be removed from the group list.

Optionally, if the PDU sessions under the group identifier involve multiple service areas, the operation shall be performed in accordance with the maximum number of each service area. Further, if the number of PDU sessions in some of the service areas has reached the maximum while that in others has not, the operation shall be performed in accordance with the NSAC group policy. For example, if the number of PDU sessions in some service areas of the group has not reached the maximum, all PDU session activation requests in the group shall be accepted.

In step S7104, if the primary NSACF has not been discovered previously, the local NSACF shall discover and select the primary NSACF for global service domain management.

In step S7105, the local NSACF sends an Nnsacf_NSAC_NumOfPDUsUpdate request to the primary NSACF. The request message carries the S-NSSAI and group identifier.

In some embodiments, when the SMF does not send the identifier/service group of the service group associated with the PDU session, the local NSACF and/or the primary NSACF may determine the identifier/service group of the group associated with the PDU session based on local configuration/OAM configuration/group identifier sent by the PCF/identifier sent by the NEF.

In step S7106, the primary NSACF checks the global number of PDU sessions and determines whether to accept or reject the request for updating the maximum number of PDU sessions from the local NSACF, based on the group identifier and group NSAC (e.g., whether the group of any PDU session is already in the NSAC counting list).

In step S7107, the primary NSACF returns an Nnsacf_NSAC_NumOfPDUsUpdate response. The response includes a newly allocated local maximum number of PDU sessions and/or local maximum number of group PDU sessions, or an indication rejecting the update of the local maximum number of PDU sessions.

In step S7108, if the primary NSACF provides the local maximum number of PDU sessions and/or local maximum number of group PDU sessions, the local NSACF updates the local maximum number of PDU sessions and/or local maximum number of group PDU sessions based on the received numbers. It then performs Step S7103a based on the updated local maximum number of PDU sessions and/or local maximum number of group PDU sessions.

In step S7109, the NSACF confirms the corresponding update by returning an Nnsacf_NSAC_NumOfPDUsUpdate_Response message to the SMF, with a result indication carried in the message. If the NSACF returns that the number of sessions established for the slice has reached the maximum allowed number, the SMF may reject the session establishment request and set the rejection cause to "the maximum number of allowed sessions for the slice has been reached". Optionally, a fallback timer and an access type may be set at the same time.

For multi-access sessions, the NSACF may receive the multi-access session and provide a result indication of reached or not reached along with the corresponding access type. When the SMF rejects a multi-access session, SMF shall set the access type as follows: if the UE uses dual access, the access type shall be indicated as dual access if the NSACF indicates dual access failure; if the NSACF indicates that one of the accesses has failed, the access type shall be indicated as the failed access received; if the UE uses single access, the access type shall be indicated as the single access received.

If the UE receives a fallback timer, it shall not request user plane resource creation under the restricted access type before the timer expires. The UE may request PDU session creation for unrestricted access types.

If the session establishment ultimately fails in subsequent procedures, the SMF shall trigger interaction with the NSACF again to deduct the corresponding number of sessions and update the response information.

### Example 2:

For the availability check and update procedure for the number of sessions established on a slice (session establishment scenario), as shown in FIG. 7b, the procedure includes the following.

In steps S7201-S7202, the UE requests session establishment on a specific network slice. The SMF triggers the availability check and update procedure for the number of sessions in the corresponding area of the slice.

In step S7203, the SMF may perform NSACF discovery and selection based on local configuration information. If the SMF does not have the NSACF address, the NSACF may be discovered via the NRF.

For steps S7204-S7206 and steps S7204-S7206, reference may be made to the description of steps S71 02-S7109 in the embodiment.

In steps S7207-S7208, based on the response message returned by the NSACF, the SMF sends a corresponding session establishment response message to the AMF and the UE, and accepts or rejects the session establishment.

### Example 3:

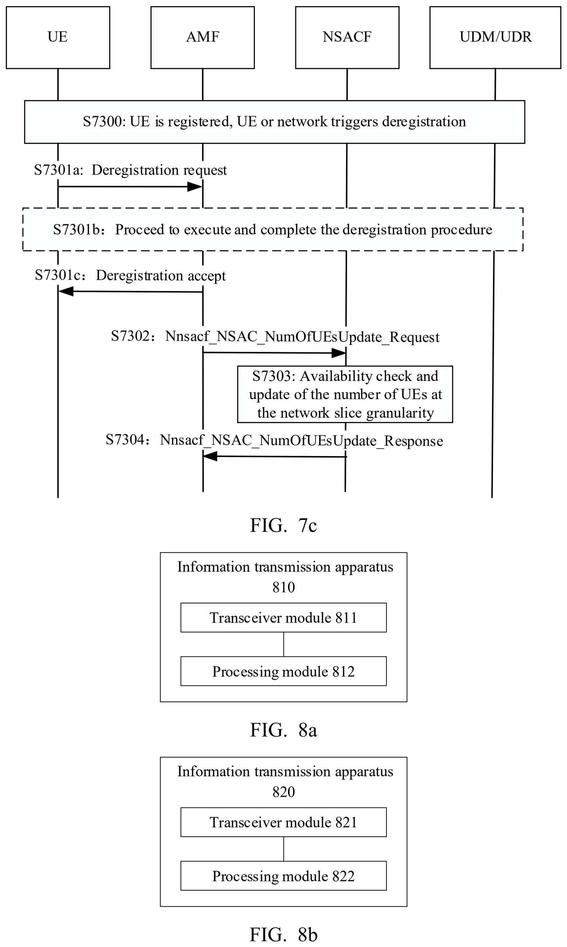

For the availability check and update procedure for the number of sessions established on a slice (session release scenario), as shown in FIG. 7c, the procedure includes the following.

In steps S7301-S7302, the UE requests PDU session release and initiates the session release procedure, sending the session ID and corresponding slice identifier information to the network. If the SMF determines that the NSAC procedure needs to be performed for the slice, it triggers the availability check and update procedure for the number of sessions on the slice.

In steps S7303-S7305, the SMF performs the corresponding NSAC procedure. For specific details of steps S7303-S7305, reference is made to the description of steps S7102-S7109 in the embodiment corresponding to the figure. Herein, the update indication sent by the SMF is to decrease the number of sessions, and the NSACF performs the corresponding update accordingly.

In steps S7306-S7307, the network side returns a PDU session release response message to the UE, and the session release procedure is completed.

An embodiment of the present disclosure further provides an apparatus for implementing any one of the above methods. For example, an apparatus is provided, which includes units for implementing each step performed by a terminal in any one of the above methods. For another example, another apparatus is also provided, which includes units for implementing each step performed by a network device (such as an access network device, or a core network device, etc.) in any one of the above methods.

It should be understood that the division of each unit in the above apparatus is merely a division of logical functions. In actual implementation, all or part of the units may be integrated into a single physical entity, or they may be physically separated. In addition, the units in the apparatus may be implemented in the form of a processor invoking software. For example, the apparatus includes a processor, which is connected to a memory, the memory stores computer instructions, and the processor invokes the computer instructions stored in the memory to implement any one of the above methods or the functions of each unit of the above apparatus. The processor is, for example, a general-purpose processor such as a central processing unit (CPU) or a microprocessor, and the memory is a memory inside the apparatus or a memory outside the apparatus. Alternatively, the units in the apparatus may be implemented in the form of hardware circuits, and the functions of some or all units may be realized through the design of hardware circuits. The above hardware circuits may be understood as one or more processors. For example, in one implementation, the above hardware circuit is an application-specific integrated circuit (ASIC), and the functions of some or all of the above units are realized through the design of the logical relationships of components in the circuit. For another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured through configuration files, thereby realizing the functions of some or all of the above units. All units of the above apparatus may be entirely implemented in the form of the processor invoking software, or entirely in the form of hardware circuits, or part of the units in the form of the processor invoking software and the remaining part in the form of hardware circuits.

In the embodiments of the present disclosure, a processor is a type of circuit with signal processing capability. In one implementation, the processor may be a circuit capable of reading and executing instructions, such as a central processing unit (CPU), a microprocessor, a graphics processing unit (GPU) (which can be understood as a type of microprocessor), or a digital signal processor (DSP), etc. In another implementation, the processor may realize certain functions through the logical relationships of a hardware circuit, where the logical relationships of the aforementioned hardware circuit are either fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, the process in which the processor loads a configuration file to realize the configuration of the hardware circuit can be understood as the process in which the processor loads instructions to realize the functions of some or all of the aforementioned units. In addition, the processor may also be a hardware circuit designed for artificial intelligence, which can be understood as a type of ASIC, such as a neural network processing unit (NPU), a tensor processing unit (TPU), or a deep learning processing unit (DPU), etc.

FIG. 8a is a schematic structural diagram of an information transmission apparatus provided by an embodiment of the present disclosure. As shown in FIG. 8a, the information transmission apparatus 810 includes: a transceiver module 811, configured to receive first information sent by a third network function, where the first information is used to indicate the first network function to perform admission control of a network slice for a first PDU session, and the first PDU session is associated with a service group. Optionally, the transceiver module 811 is configured to execute the steps related to information transmission and reception performed by the first network function in any of the above information transmission methods. Optionally, the information transmission apparatus 810 further includes a processing module 812, which is configured to execute the steps related to determination and processing performed by the first network function in any of the above methods, and details are not repeated herein.

FIG. 8b is a schematic structural diagram of an information transmission apparatus provided by an embodiment of the present disclosure. As shown in FIG. 8b, the information transmission apparatus 820 includes: a transceiver module 821, configured to receive second information sent by the first network function, where the second information is used to indicate the second network function to perform admission control of a network slice for the first PDU session, and the first PDU session is associated with a service group. Optionally, the transceiver module 821 is configured to execute the steps related to information transmission and reception performed by the second network function in any of the above information transmission methods. Optionally, the information transmission apparatus 820 further includes a processing module 822, which is configured to execute the steps related to determination and processing performed by the first network function in any of the above methods, and details are not repeated herein.

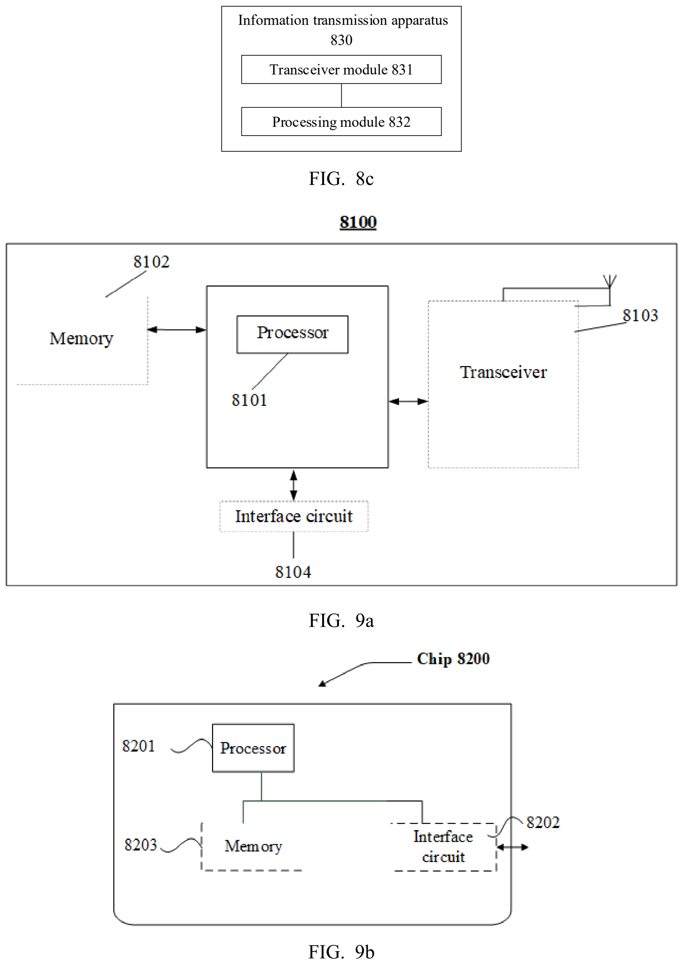

FIG. 8c is a schematic structural diagram of an information transmission apparatus provided by an embodiment of the present disclosure. As shown in FIG. 8c, the information transmission apparatus 830 includes: a transceiver module 831, configured to send first information to a first network function, where the first information is used to indicate the first network function to perform admission control of a network slice for the first PDU session, and the first PDU session is associated with a service group. Optionally, the transceiver module 831 is configured to execute the steps related to information transmission and reception performed by the third network function in any of the above information transmission methods. Optionally, the information transmission apparatus 830 further includes a processing module 832, which is configured to execute the steps related to determination and processing performed by the first network function in any of the above methods, and details are not repeated herein.

FIG. 9a is a schematic structural diagram of a communication device 8100 provided by an embodiment of the present disclosure. The communication device 8100 may be a network device (e.g., an access network device or a core network device, etc.), a terminal (e.g., a user equipment, etc.), a chip, a chip system, or a processor that supports the network device to implement any of the methods described above, or a chip, a chip system, or a processor that supports the terminal to implement any of the information transmission methods described above. The communication device 8100 may be configured to implement the information transmission methods described in the foregoing method embodiments, and reference may be made to the descriptions in the foregoing method embodiments for details.

As shown in FIG. 9a, the communication device 8100 includes one or more processors 8101. The processor 8101 may be a general-purpose processor or a special-purpose processor, such as a baseband processor or a central processing unit. The baseband processor may be configured to process communication protocols and communication data, and the central processing unit may be configured to control the communication apparatus (e.g., a base station, a baseband chip, a terminal device, a terminal device chip, a DU, or a CU, etc.), execute programs, and process program data. The processor 8101 is configured to invoke instructions to cause the communication device 8100 to execute any of the information transmission methods described above.

In some embodiments, the communication device 8100 further includes one or more memories 8102 for storing instructions. Optionally, all or part of the memory 8102 may also be located outside the communication device 8100.

In some embodiments, the communication device 8100 further includes one or more transceivers 8103. When the communication device 8100 includes one or more transceivers 8103, the communication steps such as sending and receiving in the aforementioned methods are executed by the transceivers 8103, and the other steps are executed by the processor 8101.

In some embodiments, a transceiver may include a receiver and a transmitter, where the receiver and the transmitter may be separate or integrated. Optionally, terms such as transceiver, transceiver unit, transceiver device, and transceiver circuit may be used interchangeably; terms such as transmitter, transmitting unit, transmitter device, and transmitting circuit may be used interchangeably; and terms such as receiver, receiving unit, receiver device, and receiving circuit may be used interchangeably.

Optionally, the communication device 8100 further includes one or more interface circuits 8104. The interface circuits 8104 are connected to the memory 8102, and may be configured to receive signals from the memory 8102 or other devices, and may also be configured to send signals to the memory 8102 or other apparatuses. For example, the interface circuit 8104 may read the instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited by FIG. 9a. The communication device may be a standalone device or may be part of a larger device. For example, the communication device may be: (1) a standalone integrated circuit (IC), or chip, or chip system or subsystem; (2) a collection of one or more ICs, optionally, the above IC collection may also include storage components for storing data and computer programs; (3) an ASIC, such as a Modem; (4) a module that can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) other equivalents.

FIG. 9b is a schematic structural diagram of a chip 8200 provided by an embodiment of the present disclosure. For the case where the communication device 8100 may be a chip or a chip system, reference may be made to the schematic structural diagram of the chip 8200 shown in FIG. 9b, but it is not limited thereto.

The chip 8200 includes one or more processors 8201, and the processors 8201 are configured to call instructions to cause the chip 8200 to execute any of the above information transmission methods.

In some embodiments, the chip 8200 further includes one or more interface circuits 8202. The interface circuits 8202 are connected to the memory 8203, and may be configured to receive signals from the memory 8203 or other apparatuses, and also may be configured to send signals to the memory 8203 or other apparatuses. For example, the interface circuit 8202 may read the instructions stored in the memory 8203 and send the instructions to the processor 8201. Optionally, terms such as interface circuit, interface, transceiver pin, and transceiver may be used interchangeably.

In some embodiments, the chip 8200 further includes one or more memories 8203 for storing instructions. Optionally, all or part of the memory 8203 may be located outside the chip 8200.

The present disclosure further provides a storage medium having instructions stored thereon. The instructions, when executed on the communication device 8100, cause the communication device 8100 to perform any of the above methods. Optionally, the storage medium is an electronic storage medium. Optionally, the storage medium is a computer-readable storage medium, but is not limited thereto, it may also be a storage medium readable by other apparatuses. Optionally, the storage medium may be a non-transitory storage medium, but is not limited thereto; it may also be a transitory storage medium.

The present disclosure further provides a program product, which, when executed by the communication device 8100, causes the communication device 8100 to perform any of the above information transmission methods. Optionally, the program product is a computer program product.

The present disclosure further provides a computer program, which, when executed on a computer, causes the computer to perform any one of the above methods.

Other embodiments of the present disclosure will be readily apparent to those skilled in the art upon consideration of the specification and practice of the present disclosure. This application is intended to cover any variations, uses, or adaptations of the present disclosure that follow the general principles of the present disclosure and include common knowledge or customary technical means in the art not disclosed herein. The specification and embodiments are to be regarded as illustrative only, with the true scope and spirit of the present disclosure being indicated by the following claims.

It should be understood that the present disclosure is not limited to the precise structure described and shown in the figures, and various modifications and changes may be made without departing from its scope. The scope of the present disclosure is limited only by the appended claims.

## Claims

1. An information transmission method, wherein the method is performed by a first network function, and the method comprises:
receiving first information sent from a third network function, wherein the first information is used to indicate the first network function to perform admission control of a network slice for a first protocol data unit (PDU) session, and the first PDU session is associated with a service group.

2. The method according to claim 1, wherein the first information is further used to indicate at least one of:
the first network function releasing the first PDU session from the network slice;
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
an admission control indication for indicating to release the first PDU session from the network slice;
service area information of the network slice; or
valid time information of the network slice.

3. The method according to claim 1, wherein the method further comprises:
performing admission control of the network slice for the first PDU session based on a comparison result between a first number of established second PDU sessions in the first network function for the network slice and a first threshold.

4. The method according to claim 3, wherein the method further comprises:
the first number being less than or equal to the first threshold, establishing the first PDU session in the network slice; or
the first number being greater than the first threshold, sending second information to a second network function, wherein the second information is used to indicate the second network function to perform admission control associated with the network slice for the first PDU session.

5. The method according to claim 4, wherein the method further comprises:
the service group associated with the first PDU session being registered for the network slice in the first network function, establishing the first PDU session in the service group associated with the first PDU session; or
the service group associated with the first PDU session being not registered for the network slice in the first network function, and a second number of service groups registered in the first network function for the network slice being less than or equal to a second threshold, registering the service group associated with the first PDU session in the first network function.

6. The method according to claim 4, wherein the second information is further used to indicate at least one of:
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
an admission control indication for indicating to release the first PDU session from the network slice;
service area information of the network slice; or
valid time information of the network slice.

7. The method according to claim 4, wherein the method further comprises:
receiving third information sent from the second network function, wherein the third information is used to indicate an updated first threshold; and
performing admission control of the network slice for the first PDU session based on a comparison result between the first number and a third threshold, and the third threshold is an updated value of the first threshold.

8. The method according to claim 4, wherein the method further comprises:
receiving fourth information sent from the second network function, wherein the fourth information is used to indicate whether the second network function allows establishing the first PDU session in the network slice.

9. The method according to any one of claims 3 to 8, wherein,
the first threshold is at least one of: a PDU session quota number of the network slice in the first network function, a PDU session number threshold of the network slice in the first network function, or a maximum PDU session number of the network slice in the first network function.

10. The method according to any one of claims 3 to 9, wherein the first number is associated with a service area of the network slice; and
the first threshold is associated with the service area of the network slice.

11. The method according to any one of claims 3 to 9, wherein the method further comprises at least one of:
removing a count of the first PDU session from the first number; and
deregistering the first PDU session from the service group associated with the first PDU session in the network slice;
wherein the first information further indicates to release the first PDU session from the network slice.

12. The method according to claim 11, wherein the method further comprises:
removing an identifier of a service group not registered with a PDU session from the first network function.

13. The method according to any one of claims 1 to 11, wherein the method further comprises: sending fifth information to the third network function, wherein the fifth information is used to indicate at least one of:
a result of performing admission control of the network slice;
a reason for failing to be established to the network slice;
whether a maximum number of established second PDU sessions in the network slice is reached; or
whether a maximum number of registered service groups in the network slice is reached.

14. The method according to any one of claims 1 to 13, wherein the first network function is a local network slice admission control function (NSACF), the second network function is a primary NSACF, and the third network function is an access and mobility management function (AMF).

15. An information transmission method, wherein the method is performed by a second network function, and the method comprises:
receiving second information sent from a first network function, wherein the second information is used to indicate the second network function to perform admission control of a network slice for a first protocol data unit (PDU) session, wherein the first PDU session is associated with a service group, the second information is sent by the first network function based on first information, the first information is used to indicate the first network function to perform admission control of the network slice for the first PDU session, and the first information is sent from a third network function to the first network function.

16. The method according to claim 15, wherein the second information is sent by the first network function when the first network function performs admission control of the network slice for the first PDU session and determines that a first number of established second PDU sessions in the first network function for the network slice is greater than a first threshold.

17. The method according to claim 16, wherein the method further comprises:
performing admission control of the network slice for the first PDU session based on a comparison result between a third number of third PDU sessions established in the second network function for the network slice and a fourth threshold; or
sending third information to the first network function, wherein the third information is used to indicate an updated first threshold, and the updated first threshold is used by the first network function to compare with the first threshold and determine to perform admission control of the network slice for the first PDU session.

18. The method according to claim 17, wherein the method further comprises:
the third number being less than or equal to the fourth threshold, establishing the first PDU session in the network slice; or
the third number being greater than the fourth threshold, not allowing establishing the first PDU session in the network slice.

19. The method according to claim 18, wherein the method further comprises:
the service group associated with the first PDU session being registered for the network slice in the second network function, establishing the first PDU session in the service group associated with the first PDU session; or
the service group associated with the first PDU session being not registered for the network slice in the second network function, and a second number of service groups registered in the second network function for the network slice being less than or equal to a second threshold, registering the service group associated with the first PDU session at the second network function.

20. The method according to claim 19, wherein the method further comprises:
sending fourth information to the first network function, wherein the fourth information is used to indicate whether the second network function allows establishing the first PDU session in the network slice.

21. The method according to any one of claims 17 to 20, wherein,
the fourth threshold is at least one of: a PDU session quota number of the network slice in the second network function, a PDU session number threshold of the network slice in the second network function, or a maximum PDU session number of the network slice in the second network function.

22. The method according to any one of claims 16 to 21, wherein,
the first threshold is at least one of: a PDU session quota number of the network slice in the first network function, a PDU session number threshold of the network slice in the first network function, or a maximum PDU session number of the network slice in the first network function.

23. The method according to any one of claims 16 to 22, wherein the second information is further used to indicate at least one of:
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
an admission control indication for indicating to release the first PDU session from the network slice;
service area information of the network slice; or
valid time information of the network slice.

24. An information transmission method, wherein the method is performed by a third network function, and the method comprises:
sending first information to a first network function, wherein the first information is used to indicate the first network function to perform admission control of a network slice for a first protocol data unit (PDU) session, and the first PDU session is associated with a service group.

25. The method according to claim 24, wherein the first information is further used to indicate at least one of:
the first network function releasing the first PDU session from the network slice;
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
an admission control indication for indicating to release the first PDU session from the network slice;
service area information of the network slice; or
valid time information of the network slice.

26. The method according to claim 24 or 25, wherein,
the first network function performs admission control of the network slice based on a comparison result between a first number of established second PDU sessions in the first network function for the network slice and a first threshold.

27. The method according to claim 26, wherein,
the first number being less than or equal to the first threshold, the first network function establishes the first PDU session in the network slice; and/or
the first number being greater than the first threshold, the first network function sends second information to a second network function, wherein the second information is used to indicate the second network function to perform admission control associated with the network slice for the first PDU session.

28. The method according to claim 27, wherein the second information is further used to indicate at least one of:
an identifier of the service group associated with the first PDU;
an identifier of the first PDU session;
an authorized access type of the network slice;
an identifier of the network slice;
an identifier of the third network function;
an admission control indication for indicating to establish the first PDU session in the network slice;
an admission control indication for indicating to release the first PDU session from the network slice;
service area information of the network slice; or
valid time information of the network slice.

29. The method according to claim 27, wherein,
the admission control of the network slice performed by the first network function is determined by the first network function based on a comparison result of the first number and an updated first threshold, wherein the updated first threshold is indicated by third information sent from the second network function to the first network function based on the second information.

30. The method according to any one of claims 26 to 29, wherein,
the first threshold is at least one of: a PDU session quota number of the network slice in the first network function, a PDU session number threshold of the network slice in the first network function, and a maximum PDU session number of the network slice in the first network function.

31. The method according to any one of claims 24 to 30, wherein the method further comprises:
receiving fifth information sent by the first network function, wherein the fifth information is used to indicate at least one of:
a result of performing admission control of the network slice for the first PDU session;
a reason for failing to be established to the network slice;
whether a maximum number of established second PDU sessions in the network slice is reached; or
whether a maximum number of registered service groups in the network slice is reached.

32. The method according to claim 31, wherein,
the result of performing admission control of the network slice for the first PDU session is indicated by the second network function to the first network function via fourth information.

33. The method according to any one of claims 24 to 32, wherein the method further comprises: determining the service group to which the first PDU session belongs based on at least one of:
a local configuration of the third network function;
an operation administration and maintenance (OAM) configuration of the third network function;
unified data management (UDM) subscription information of a terminal associated with the first PDU session;
a service capability of a terminal associated with the first PDU session; or
service group information corresponding to a permanent equipment identifier (PEI) of a terminal associated with the first PDU session.

34. An information transmission apparatus, wherein the apparatus comprises:
a transceiver module, configured to receive first information sent from a third network function, wherein the first information is used to indicate the first network function to perform admission control of a network slice for a first protocol data unit (PDU) session, and the first PDU session is associated with a service group.

35. An information transmission apparatus, wherein the apparatus comprises:
a transceiver module, configured to receive second information sent from a first network function, wherein the second information is used to indicate the second network function to perform admission control of a network slice for a first protocol data unit (PDU) session, wherein the first PDU session is associated with a service group.

36. An information transmission apparatus, wherein the apparatus comprises:
a transceiver module, configured to send first information to a first network function, wherein the first information is used to indicate the first network function to perform admission control of a network slice for a first protocol data unit (PDU) session, and the first PDU session is associated with a service group.

37. A communication system, comprising:
a first network function configured to implement the information transmission method according to any one of claims 1 to 14,
a second network function configured to implement the information transmission method according to any one of claims 15 to 23, and
a third network function configured to implement the information transmission method according to any one of claims 24 to 34.

38. A communication device, wherein the communication device comprises:
one or more processors;
wherein the processor is configured to call instructions to cause the communication device to execute the information transmission method according to any one of claims 1 to 14, 15 to 23, or 24 to 34.

39. A storage medium, wherein the storage medium stores instructions, and the instructions, when run on a communication device, cause the communication device to execute the information transmission method according to any one of claims 1 to 14, claims 15 to 23, or claims 24 to 34.
